# EUROPEAN PATENT SPECIFICATION

(11) **EP 3 141 950 B1**
(45) Date of publication and mention of the grant of the patent: **06.03.2019**
(21) Application number: 16187889.7
(22) Date of filing: 08.09.2016
(51) Int. Cl.: G03B 21/20, G03B 21/16

(54) **IMAGE PROJECTION APPARATUS**
BILDPROJEKTIONSVORRICHTUNG
APPAREIL DE PROJECTION D'IMAGES

(30) Priority: 09.09.2015 JP 2015178017
(43) Date of publication of application: 15.03.2017
(73) Proprietor: Ricoh Company, Ltd., Tokyo 143-8555 (JP)
(72) Inventor: MIKAWA, Akihisa, Ohta-ku, Tokyo 143-8555 (JP); FUJIOKA, Tetsuya, Ohta-ku, Tokyo 143-8555 (JP); KANAI, Hideo, Ohta-ku, Tokyo 143-8555 (JP); NISHIMORI, Takehiro, Ohta-ku, Tokyo 143-8555 (JP); MIKUTSU, Yasunari, Ohta-ku, Tokyo 143-8555 (JP); TSUCHIYA, Satoshi, Ohta-ku, Tokyo 143-8555 (JP); NISHI, Yukimi, Ohta-ku, Tokyo 143-8555 (JP); MASHIMO, Jun, Ohta-ku, Tokyo 143-8555 (JP); HIRAMATSU, Takahiro, Ohta-ku, Tokyo 143-8555 (JP); SAITO, Yoshito, Ohta-ku, Tokyo 143-8555 (JP)
(74) Representative: J A Kemp

(56) References cited:
- US-A1- 2007 046 900
- US-A1- 2009 027 627
- US-A1- 2009 268 170
- US-A1- 2011 279 789

## Description

The present invention relates to an image projection apparatus.

Conventionally, an image projection apparatus that uses a halogen lamp, a metal halide lamp, and a high-pressure mercury lamp as a light source has been known. These lamps include a reflector in which a light emitting unit of a light emitting tube is disposed. Because the temperature of the light emitting unit of the light emitting tube will be increased, a cooling fan is used to blow air into the reflector to cool the light emitting unit with the air.

For example, Japanese Patent No. 5197117 discloses an image projection apparatus that mixes high-temperature first air that has cooled the light source with low-temperature second air and third air to reduce temperature of air to be discharged from an exhaust fan. The first air has flowed into the reflector by the cooling fan, and cooled the light-emitting unit of the light-emitting tube.

The image projection apparatus includes an exhaust box into which the first air, the second air, and the third air flow, and a lamp box that functions as a light source housing unit that stores therein the light source. The exhaust box is placed adjacent to the exhaust fan in a rotation axis direction of the exhaust fan, and adjacent to the lamp box, in a direction perpendicular to the rotation axis direction of the exhaust fan.

The light source is disposed in the lamp box, so that the reflector is placed further away from the exhaust fan than an electrode portion of the light emitting tube, in the rotation axis direction of the exhaust fan. The exhaust box includes a first duct into which the first air flows and a plurality of second ducts into which the second air flows. The second ducts are provided closer to the exhaust fan than the first duct, in the rotation axis direction of the exhaust fan, and the seconds ducts are arranged side by side in the rotation axis direction of the exhaust fan. An air outflow port of the first duct is placed further away from the lamp box than air outflow ports of the second ducts, in the direction perpendicular to the rotation axis direction of the exhaust fan. The air that has flowed out from the first duct flows to a location further away from the light source than a rotation axis of the exhaust fan, in the direction perpendicular to the rotation axis direction of the exhaust fan. An outflow port of a second duct is placed closer to the lamp box, in the direction perpendicular to the rotation axis of the exhaust fan, as the second duct is placed closer to the exhaust fan, in the rotation axis direction of the exhaust fan. The second air that has flowed out from the second duct that is placed close to the exhaust fan, is discharged by the exhaust fan from a location closer to the lamp box than the rotation axis of the exhaust fan, in the direction perpendicular to the rotation axis of the exhaust fan.

The lamp box includes a first opening through which the first air flows into the first duct, and a second opening through which the second air flows into the second ducts. The exhaust box has an opening through which the third air flows into the first duct.

The first air that has flowed into the first duct is mixed with the third air, and is guided up to the exhaust fan through the first duct. Meanwhile, the second air that has flowed into the second ducts in a dispersed manner, is guided up to the exhaust fan through the second ducts. Then, mixed air of the first air and the third air that is discharged from the first duct is mixed with the low-temperature second air that is discharged from the second ducts, immediately before the exhaust fan. The mixed air is then discharged from the outlet port of the casing.

However, in the image projection apparatus disclosed in Japanese Patent No. 5197117 described above, there still remains a problem in that large fluctuations may occur in the temperature distribution of the exhaust air that is discharged from the outlet port of the casing.

US 2009/0027627 discloses an image projection apparatus including a heat generating member disposed inside the apparatus, an exhaust fan exhausting an air that has cooled the heat generating member to the outside of the apparatus, and a duct guiding the air from the heat generating member to the exhaust fan. An outflow opening of the duct is oriented in a direction different from an inflow direction of the air into an inflow opening thereof. At least one air guiding wall is provided inside the duct, which forms plural airflow paths within a cross section extending along the inflow direction and an outflow direction of the air.

US 2009/0268170 discloses an image projection apparatus including a lamp, an air duct configured to lead air from a cooling fan to the inside of a reflector of the lamp, an exhaust duct configured to lead first air, second air, and third air to an exhaust port formed in a housing of the image projection apparatus, the first air passing the inside of the reflector, the second air being drawn from a first inlet port in the housing and passing an area that faces an outer surface of the reflector, and the third air being drawn from a second inlet port formed in the housing, wherein a first area that blends the first air with the third air, and a second area that blends blended area from the first area with the second air and leads resultant air to the exhaust port are provided inside of the exhaust duct.

US 2011/0279789 discloses a projection display device provided with a main body cabinet; a projection port which is formed in the main body cabinet to guide modulated light to an outside of the projection display device; an air outlet which is formed at least in one of two surfaces of the main body cabinet facing each other across the projection port; and an exhaust unit which discharges, to the outside, air that has been warmed by heat exchange with a member to be cooled which is disposed in the main body cabinet through the air outlet. In this arrangement, the exhaust unit includes an exhaust fan, and a deflection member which deflects air discharged from the exhaust fan in a direction away from the projection plane.

US 2007/0046900 discloses a projector including a ventilation device that discharges air inside the exterior chassis to the outside, which includes an axial fan provided with a suction port for sucking air and a discharge port for discharging the sucked air According to one embodiment of the present invention, an image projection apparatus is described in the appended claims.

The invention is defined in the claims.

According to the present invention, it is possible to prevent large fluctuations in the temperature distribution of the exhaust air that is discharged from the outlet port of the casing.

In the accompanying drawings:
FIG. 1 is an external perspective view illustrating a projector and a projection surface S;
FIG. 2A to FIG. 2C are internal perspective views of the projector from which an exterior cover is removed;
FIG. 3A and FIG. 3B are internal perspective views of the projector from which a main body casing excluding a lower side sheet metal portion is removed;
FIG. 4 is a perspective view illustrating an optical engine unit provided inside the projector;
FIG. 5 is a perspective view illustrating a state of installing a light source unit 15 to the main body casing;
FIG. 6A is a schematic perspective view of the light source unit, and FIG. 6B is a perspective view of the light source unit when viewed from an arrow b direction illustrated in FIG. 6A;
FIG. 7 is a perspective view illustrating a state of the light source unit from which a light source casing excluding a light emission side surface is removed;
FIG. 8 is a sectional view cut along an alternate long and short dash line A in FIG. 6A;
FIG. 9 is a perspective view of a lighting unit, a projection lens unit, and a light modulator when viewed from the rear;
FIG. 10 is a view illustrating optical system components stored in the lighting unit with the light modulator;
FIG. 11 is a perspective view of the light modulator;
FIG. 12 is a perspective view illustrating the optical engine unit;
FIG. 13A and FIG. 13B are perspective views illustrating optical system components in the projection optical unit;
FIG. 14 is a perspective view illustrating a light path from the projection lens unit to the projection surface S;
FIG. 15A is a perspective view illustrating a light source cooling mechanism and the optical engine unit, and FIG. 15B is a perspective view illustrating the light source cooling mechanism;
FIG. 16A is a perspective view illustrating a light source exhaust duct, and FIG. 16B is a sectional view of the light source exhaust duct cut along an alternate long and short dash line E in FIG. 16A;
FIG. 17 is a sectional view illustrating a part of a mold for molding the light source exhaust duct;
FIG. 18 is a view for explaining light leaking from the light source unit;
FIG. 19 is a sectional view cut along C in FIG. 15A;
FIG. 20 is a sectional view cut along B in FIG. 15A;
FIG. 21 is a sectional view cut along D in FIG. 15B;
FIG. 22A is a perspective view of the projector when viewed from the rear, from which an upper side sheet metal portion, a rear side sheet metal portion, and a right side sheet metal portion of the main body casing are removed, FIG. 22B is a front side perspective view illustrating the inside of the main body casing of the projector, and FIG. 22C is a rear side perspective view illustrating the inside of the main body casing of the projector from which a mirror bracket of the projection optical unit is removed;
FIG. 23 is a block diagram illustrating how power is supplied;
FIG. 24 is a perspective view illustrating a front side sheet metal portion and a light source driving unit;
FIG. 25 is a side view illustrating the optical engine unit and the light source driving unit;
FIG. 26 is a perspective view illustrating the front side sheet metal portion and a main power supply unit;
FIG. 27 is a view for explaining an inclination of a main power supply circuit board;
FIG. 28 is a view illustrating a flow of board cooling air in a main body; and
FIG. 29 is a sectional view cut along a line K-K in FIG. 25.

The accompanying drawings are intended to depict exemplary embodiments of the present invention and should not be interpreted to limit the scope thereof. Identical or similar reference numerals designate identical or similar components throughout the various drawings.

The terminology used herein is for the purpose of describing particular embodiments only and is not intended to be limiting of the present invention.

As used herein, the singular forms "a", "an" and "the" are intended to include the plural forms as well, unless the context clearly indicates otherwise.

In describing preferred embodiments illustrated in the drawings, specific terminology may be employed for the sake of clarity. However, the disclosure of this patent specification is not intended to be limited to the specific terminology so selected, and it is to be understood that each specific element includes all technical equivalents that have the same function, operate in a similar manner, and achieve a similar result.

Hereinafter, an embodiment of the present invention will be described with reference to the accompanying drawings.

First, an overall structure of an image projection apparatus according to the present invention will be described.

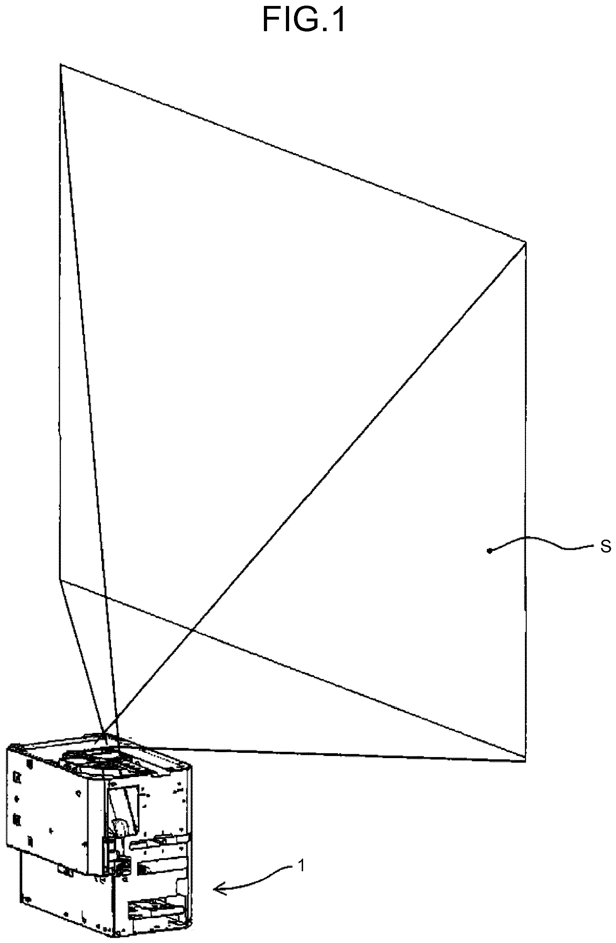

FIG. 1 is an external perspective view illustrating a projector 1 that serves as an image projection apparatus according to an embodiment of the present invention and a projection surface S such as a screen. In the following explanation, the side closer to the projection surface S, of the projector 1 will be referred to as a rear side.

The projector 1 is a device that forms a projection image based on image data input from personal computers, video cameras, and the like, and that projects and displays the projection image on the projection surface S such as a screen. In particular, in recent years, liquid crystal projectors are improving brightness due to high-resolution liquid crystal panels and a highly efficient light source (lamp), and are becoming less expensive. Projectors 1 that use a digital micro-mirror device (DMD) as a micro driving mirror device and that are small in size and light in weight have been widely used, and started to be widely used in homes as well as in workplaces and schools. As for the front-type projector, the portability has been improved, and is used for small meetings with a small number of participants. With such a projector, it is important to project large images (enlargement of a projection surface) and to reduce "projection space required outside the projector" as much as possible. As will be described below, in the projector 1 of the present embodiment, a projection optical system such as a projection lens is set in parallel with the projection surface S, and after a light beam is reflected by a folding mirror, the light beam is enlarged and projected on the projection surface S by a free curved surface mirror. Due to such a structure, it is possible to reduce the size of the optical engine unit vertically and three-dimensionally.

The light beam of the projection image is output from the upper surface of the projector 1, and the light beam is projected onto the projection surface S. In addition, a focus lever 4a for adjusting focus is provided on the side surface of the projector 1.

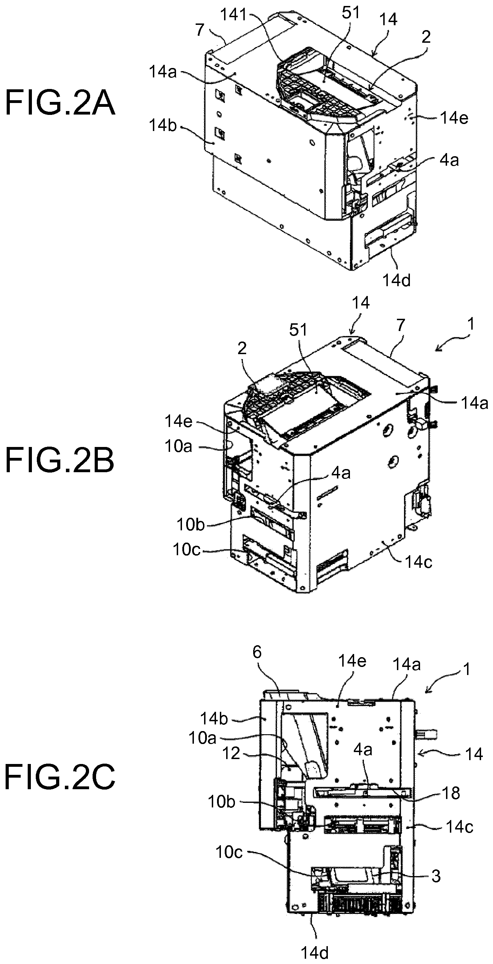

FIG. 2A to FIG. 2C are perspective views of the projector 1 from which an exterior cover is removed. FIG. 2A is a perspective view of the projector 1 when viewed from the front. FIG. 2B is a perspective view of the projector 1 when viewed from the rear. FIG. 2C is a right side view of the projector 1 corresponding to a side where the optical engine unit is disposed when viewed from the front.

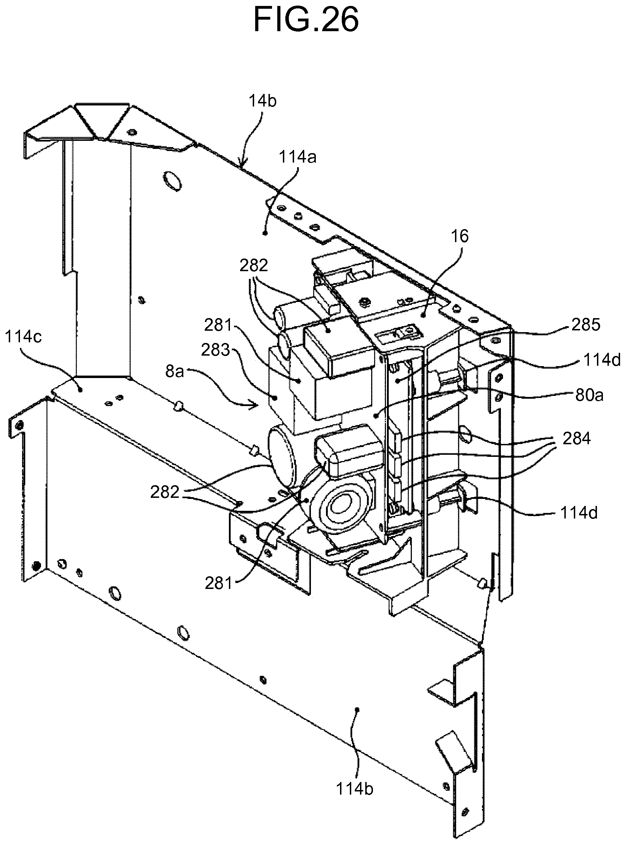

The projector 1 includes an optical engine unit 100, which will be described below, and a main body casing 14 that holds various boards such as a ballast board 12a. The main body casing 14 includes an upper side sheet metal portion 14a, a front side sheet metal portion 14b, a rear side sheet metal portion 14c, a lower side sheet metal portion 14d, and a right side sheet metal portion 14e. The casing 14 is formed by fixing the sheet metal portions to each other with screws. A projection opening 141 through which the light beam of a projection image is passed, is formed on the upper side sheet metal portion 14a. The front side sheet metal portion 14b holds a ballast board portion, a main power supply unit 8a (see FIG. 26), which will be described below, and the like. The rear side sheet metal portion 14c holds a sub-power supply unit 8b and the like. The lower side sheet metal portion 14d holds the optical engine unit and the like. In addition, as illustrated in FIG. 2C, the right side sheet metal portion 14e is provided with a plurality of inlet ports 10a to 10c and an operational opening 18 used for operating the focus lever 4a.

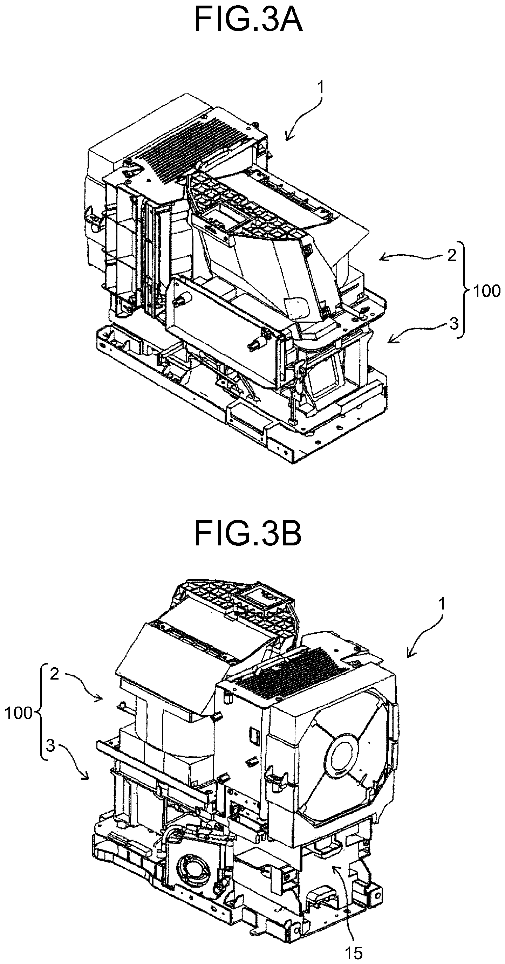

FIG. 3A and FIG. 3B are internal perspective views of the projector 1 from which the main body casing 14 excluding the lower side sheet metal portion 14d is removed. FIG. 3A is an internal perspective view of the projector 1 when viewed from the front. FIG. 3B is an internal perspective view of the projector 1 when viewed from the rear.

The projector 1 includes the optical engine unit 100 and a light source unit 15 including a light source that emits white light. The optical engine unit 100 includes an image forming unit 3 and a projection optical unit 2. The image forming unit 3 serves as an image forming unit that forms an image using the light from the light source. The projection optical unit 2 projects the light beam of the image that is formed by the image forming unit 3, onto the projection surface S.

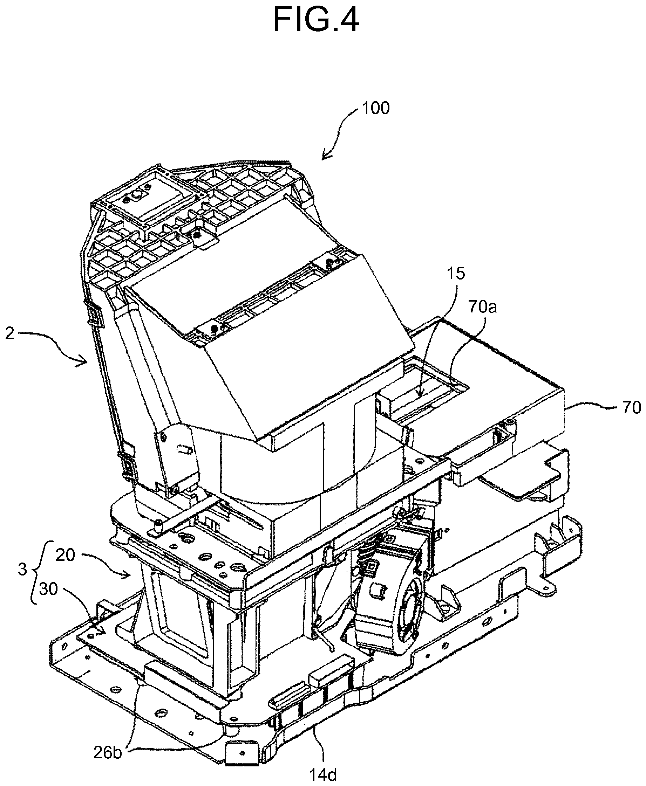

FIG. 4 is a perspective view illustrating the optical engine unit 100 and the like provided inside the projector 1.

The image forming unit 3 includes a light modulator 30 provided with the DMD and a lighting unit 20. The DMD serves as a micro driving mirror device and includes a large number of micro-mirrors the reflection surface of which can change the inclination. The lighting unit 20 reflects the light from the light source and irradiates the DMD with the light. The light modulator 30, the lighting unit 20, and the projection optical unit 2 that form the optical engine unit 100 are arranged in the vertical direction. In addition, a light source housing 70 to store the light source unit 15 therein is disposed on the right of the lighting unit 20 in the view. A housing outlet port 70a from which the air that has cooled the light source is discharged, is disposed on the upper surface of the light source housing 70.

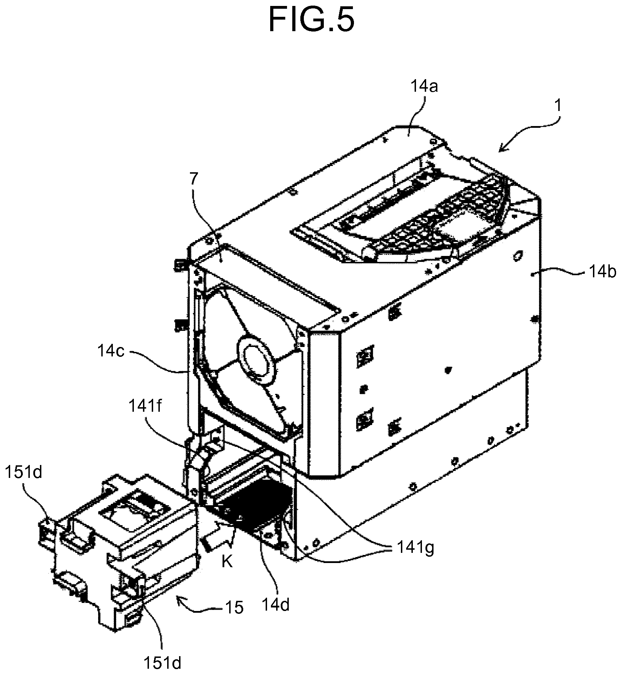

FIG. 5 is a perspective view illustrating a state of installing the light source unit 15 to the main body casing.

As illustrated in FIG. 5, the light source unit 15 is detachably formed relative to the projector 1. More specifically, a light source attachment/detachment opening 141f is formed at the left side surface of the main body casing 14. The light source attachment/detachment opening 141f is formed of the front side sheet metal portion 14b, the rear side sheet metal portion 14c, the lower side sheet metal portion 14d, and an exhaust fan 7 of the main body casting 14. By pushing the light source unit 15 into the main body casing in the arrow K direction in the view, the light source unit 15 is installed in the projector. In addition, the exhaust fan 7 is provided above the light source attachment/detachment opening 141f. As illustrated in FIG. 5, in the present embodiment, the outlet port of the casing is the outlet port of the exhaust fan.

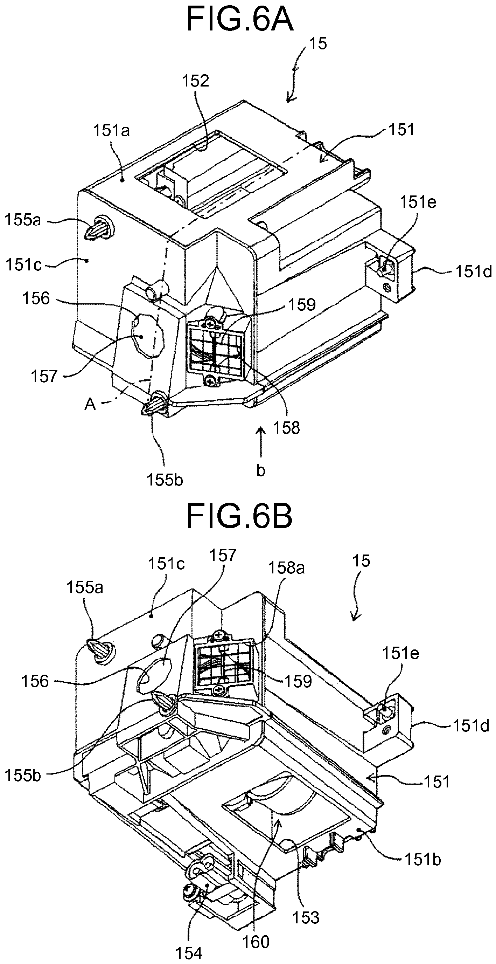

FIG. 6A is a schematic perspective view of the light source unit 15, and FIG. 6B is a perspective view of the light source unit 15 when viewed from an arrow b direction illustrated in FIG. 6A.

The light source unit 15 includes a light source casing 151 that stores therein a light source 160 and that is made of resin. A light source outlet port 152 from which the air that has cooled the light source is discharged, is provided on an upper surface 151a of the light source casing. In addition, as illustrated in FIG. 6B, a second light source suction port 153 for drawing in air to the light source casing, which will be described below, is provided on a lower surface 151b of the light source casing 151. A connector 154 that is connected to a power supply connector provided on the apparatus main body, is also provided on the lower surface 151b.

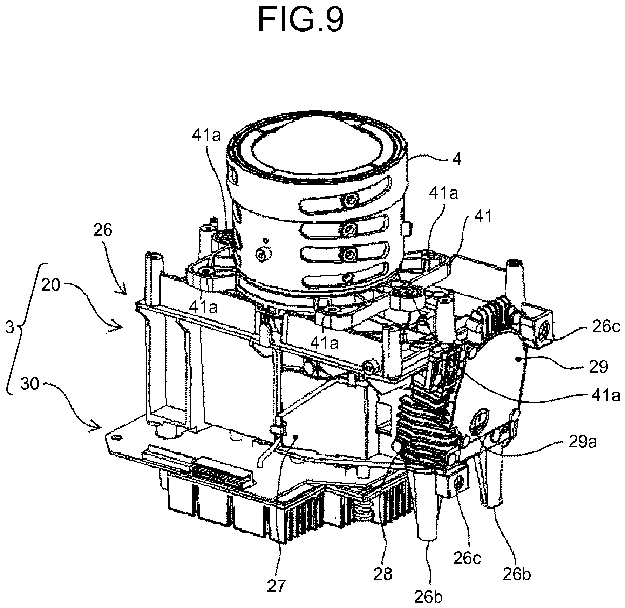

An opening 156 through which the light from the light source passes is provided on a light emission side surface 151c of the light source casing 151. A glass plate 157 is fixed to the opening 156. Two light source positioning projections 155a and 155b are provided on the light emission side surface 151c on the diagonal line. Each of the light source positioning projections 155a and 155b is inserted into a light source positioning hole 26c (see FIG. 9) on the lighting unit, thereby positioning the light source unit 15 to the lighting unit 20. A casing fixing portion 151d is provided at the end opposite from the light emission side on both side surfaces of the light source unit 15 (see FIG. 5). A fitting projection 151e is provided on each of the casing fixing portions 151d, and the light source unit 15 is fixed to the main body casing 14, when the fitting projection 151e is fitted into a fitting hole having been provided on a light source fixing recess 141g of the main body casing illustrated in the above FIG. 5.

An inflow port 158a that allows air into a reflector of the light source 160 is provided on the light emission side surface 151c of the light source casing 151. The inflow port 158a has an explosion proof mesh 159. If the light emitting tube of the light source explodes, the explosion proof mesh 159 prevents the broken pieces from spreading.

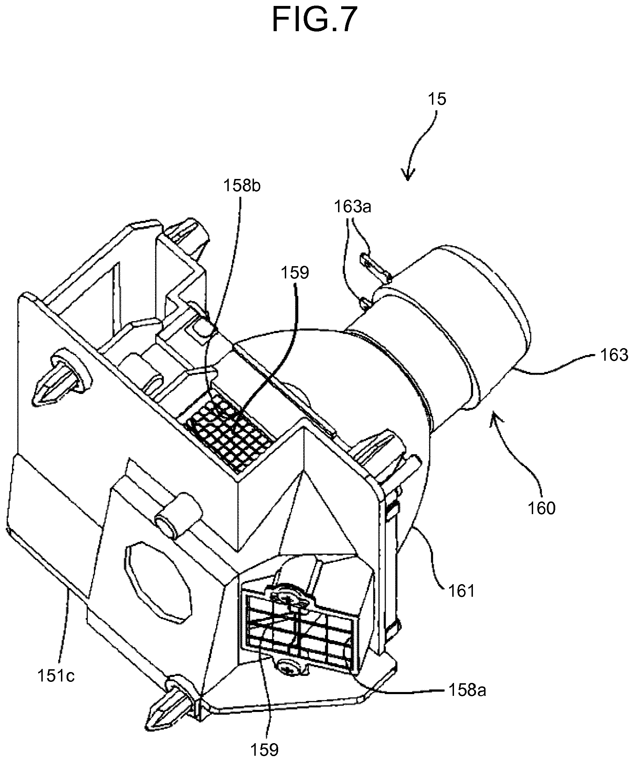

FIG. 7 is a perspective view illustrating a state of the light source unit from which the light source casing excluding the light emission side surface 151c is removed.

As illustrated in FIG. 7, a reflector 161 of the light source 160 is fixed to the light emission side surface 151c, and the light emission side surface 151c closes the opening of the reflector 161. An outflow port 158b that allows the air in the reflector 161 to flow out is provided on the upper portion of the light emission side surface 151c. The outflow port 158b also has an explosion proof mesh 159.

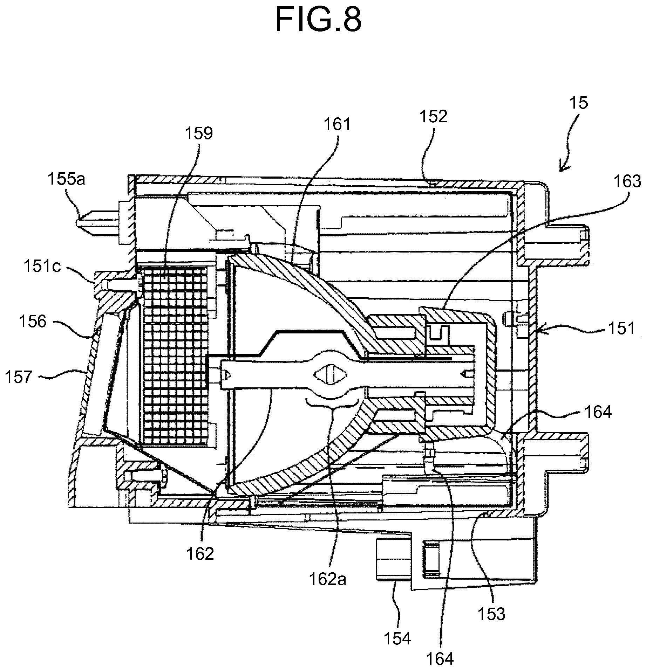

FIG. 8 is a sectional view cut along an alternate long and short dash line A in FIG. 6A.

The light source 160 is a discharge lamp such as a halogen lamp, a metal halide lamp, and a high-pressure mercury lamp. The light source 160 includes a light emitting tube 162 provided with a light emitting unit 162a in which a high-pressure gas is enclosed. The light source 160 also includes the reflector 161 that serves as a reflection member for reflecting the light emitted from the light emitting unit 162a. The reflector 161 has a mortar shape (substantially conical shape), and the light emitting tube 162 is fixed at the base of the reflector 161. The reflector 161 also includes an electrode portion 163 provided with an electrode terminal 163a (see FIG. 7) that is connected to the light emitting tube 162. The electrode terminal 163a is connected to the connector 154 through a conduction wire 164.

The light output from the light emitting unit 162a of the light source 160 is collected at the opening 156 of the light emission side surface 151c by the reflector 161, and is output from the light source unit 15 after transmitting through the glass plate 157.

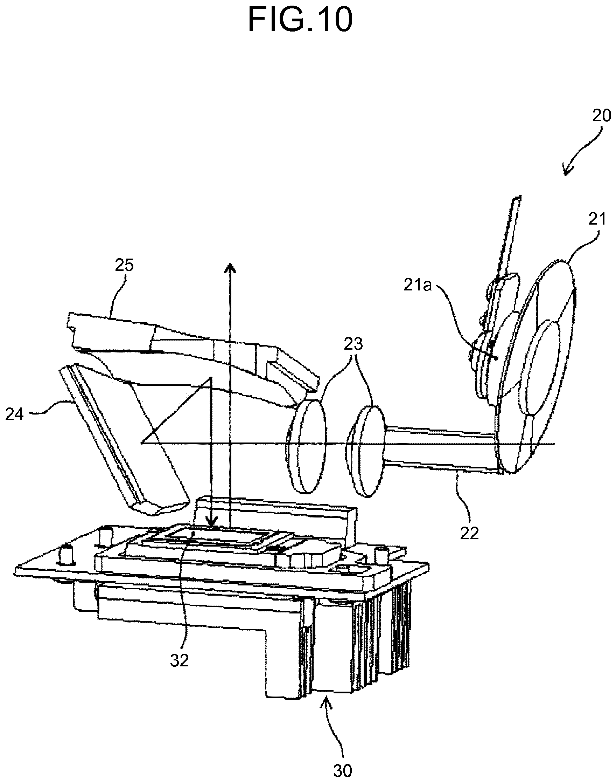

FIG. 9 is a perspective view of the lighting unit 20, a projection lens unit 4, and the light modulator 30 when viewed from the rear. FIG. 10 is a view illustrating optical system components stored in the lighting unit 20 with the light modulator 30.

As illustrated in FIG. 10, the lighting unit 20 includes a color wheel 21, a light tunnel 22, two pieces of relay lenses 23, a cylinder mirror 24, and a concave mirror 25 that are held in a light bracket 26 illustrated in FIG. 9.

The color wheel 21 is in a disc shape, and is fixed to a rotation portion of a color motor 21a. The color wheel 21 has filters of red (R), green (G), blue B, and the like in the rotating direction. The light tunnel 22 has a rectangular tube shape, and the inner peripheral surface is a mirror surface.

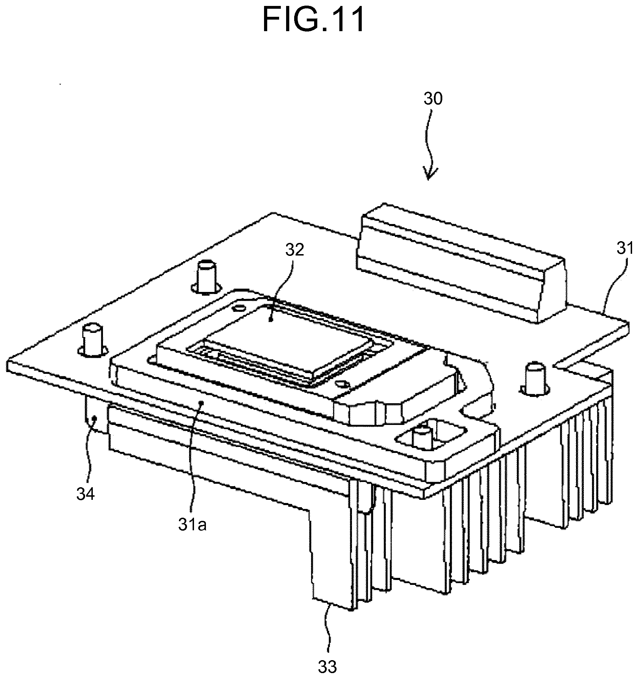

As illustrated in FIG. 9, an OFF light plate 27 is fixed to the rear side surface of the light bracket 26. The light bracket 26 has four leg portions 26b. As illustrated in FIG. 4, the leg portions 26b further from the light source unit 15 penetrate through the light modulator 30. The four leg portions 26b are fixed to the lower side sheet metal portion 14d of the main body casing 14, and support the weight of the optical engine unit 100. By providing the leg portions, space is formed to draw in outside air to a heat sink 33 (see FIG. 11) that serves as a cooling unit for cooling a DMD 32 of the light modulator 30.

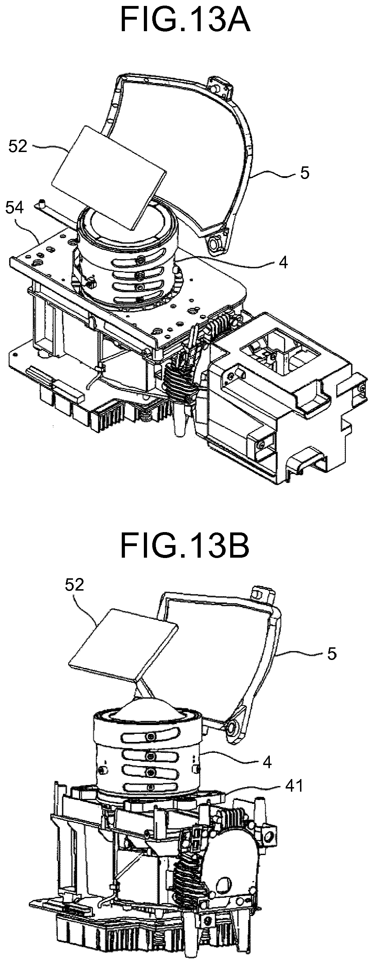

The projection lens unit 4 is arranged above the lighting unit 20, and is formed of a plurality of lenses. The projection lens unit 4 is held in a lens holder 41, and the lens holder 41 has a plurality of through holes 41a through which screws pass. Screws are inserted into the through holes 41a, and the projection lens unit 4 is fixed to a base member 54 (see FIG. 13A) of the projection optical unit 2, which will be described below, with the screws.

An end closer to the light source unit, of the light bracket 26 has light source positioning holes 26c, through which the light source positioning projections 155a and 155b (see FIG. 6A and FIG. 6B) provided on the light emission side surface 151c of the light source casing 151 are inserted.

The light bracket 26 also includes a cooling member 28 made of aluminum that covers the color wheel 21 and that releases the heat of the color wheel 21 and the color motor 21a. The light bracket 26 also includes a wheel cover 29 that covers the surface opposite from the light source 160 of the color wheel 21. The wheel cover 29 has a through hole 29a through which the light from the light source 160 passes.

As illustrated in FIG. 10, the light collected by the reflector 161 reaches the peripheral end of the color wheel 21, through the glass plate 157. The light that has reached the peripheral end of the color wheel 21 is separated into the light of R, G, and B in a time division manner, by the rotation of the color wheel 21.

The light separated by the color wheel 21 enters the light tunnel 22. The light tunnel 22 has a rectangular tube shape, and the inner peripheral surface is a mirror surface. The light that has entered the light tunnel 22 is made into a uniform surface light source, while being reflected by the inner peripheral surface of the light tunnel 22 a plurality of times, and is output toward the relay lenses 23

The light that has passed through the light tunnel 22 transmits through the two pieces of the relay lenses 23, reflected by the cylinder mirror 24 and the concave mirror 25, and is collected on an image generation surface of the DMD 32 to form an image.

FIG. 11 is a perspective view of the light modulator 30.

As illustrated in FIG. 11, the light modulator 30 includes a DMD board 31 on which the DMD 32 is mounted. The DMD 32 is mounted on a socket 31a provided on the DMD board 31. The image generation surface of the DMD 32 on which micro-mirrors are arranged in a matrix faces upward. The DMD board 31 includes, for example, a driving circuit for driving a DMD mirror. The heat sink 33 that serves as a cooling unit for cooling the DMD 32 is fixed on the rear surface (surface opposite from the surface on which the socket 31a is provided) of the DMD board 31. A through hole is formed on the DMD board 31 where the DMD 32 is to be installed, and a projection unit that is to be inserted into the through hole is formed on the heat sink 33. The tip end of the projection unit is flat, and by inserting the projection unit into the through hole, the flat portion at the tip end of the projection unit is brought into contact with the rear surface (surface opposite from the image generation surface) of the DMD 32. An elastically deformable heat transfer sheet may adhere to the location where the flat portion and the heat sink 33 at the rear surface of the DMD 32 come into contact. Consequently, it is possible to enhance the adhesion between the flat portion of the projection unit and the rear surface of the DMD 32, and increase the thermal conductivity.

The heat sink 33 is fixed, when a fixation member 34 pressurizes the heat sink 33 toward the surface opposite from the surface on which the socket 31a of the DMD board 31 is provided.

A plurality of movable micro-mirrors are arranged in a matrix on the image generation surface of the DMD 32. The mirror surface of each of the micro-mirrors may be inclined around a twist axis at a predetermined angle, and may have two states of "ON" and "OFF". As illustrated in the above FIG. 10, when the micro-mirror is turned "ON", the light from the light source 160 is reflected toward the projection lens unit 4. When the micro-mirror is turned "OFF", the light from the light source 160 is reflected toward the OFF light plate 27 that is held at the side surface of the light bracket 26 illustrated in the above FIG. 9 (in the direction orthogonal to a paper surface in FIG. 10). Thus, by driving each mirror individually, it is possible to control the projection of light for each pixel of image data, thereby generating an image.

The light emitted to the OFF light plate 27 is turned into heat, absorbed by the OFF light plate 27, and cooled by the outside airflow.

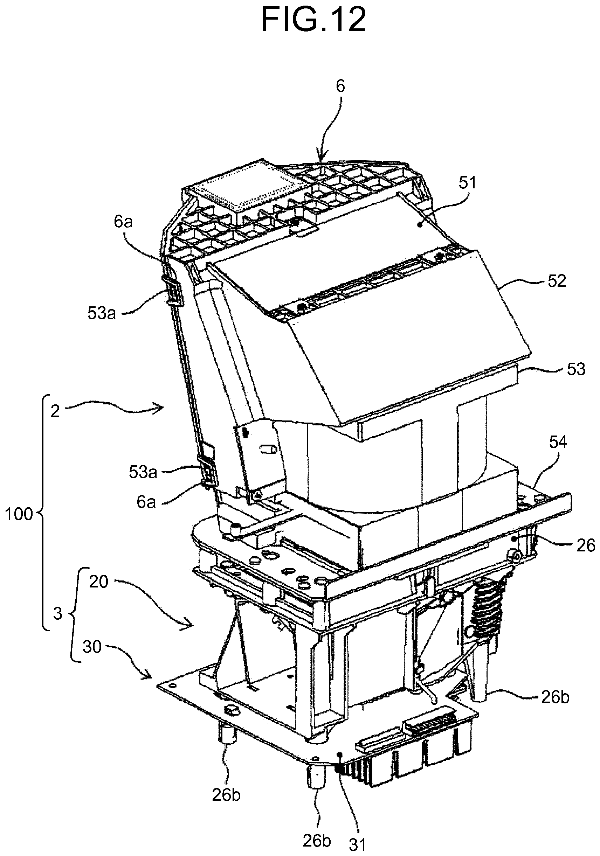

FIG. 12 is a perspective view illustrating the optical engine unit 100.

The projection optical unit 2 includes a mirror bracket 53 that holds a folding mirror 52 and a dustproof glass 51, and a free mirror bracket 6 that holds a concave mirror 5 so as to cover the concave mirror 5 (see FIG. 13). Two holes 6a that extend in the rear direction are provided at both right and left ends of the free mirror bracket 6, with a predetermined interval therebetween in the vertical direction. The free mirror bracket 6 is snap-fitted into the mirror bracket 53, by fitting clips 53a that are provided on the mirror bracket 53 into the holes 6a. The mirror bracket 53 is fixed to the base member 54. The base member 54 on which the lens holder 41, which is described above, and the mirror bracket 53 are fixed, is attached to the light bracket 26 with screws.

FIG. 13A and FIG. 13B are perspective views illustrating the projection optical unit 2 from which the mirror bracket 53 and the free mirror bracket 6 are removed. The projection optical unit 2 includes the projection lens unit 4, the folding mirror 52, the concave mirror 5, the dustproof glass 51, and the like. The reflection surface of the concave mirror 5 in a concave shape that reflects the light may also be a spherical surface, a rotationally symmetrical aspherical surface, a free curved surface shape, or the like.

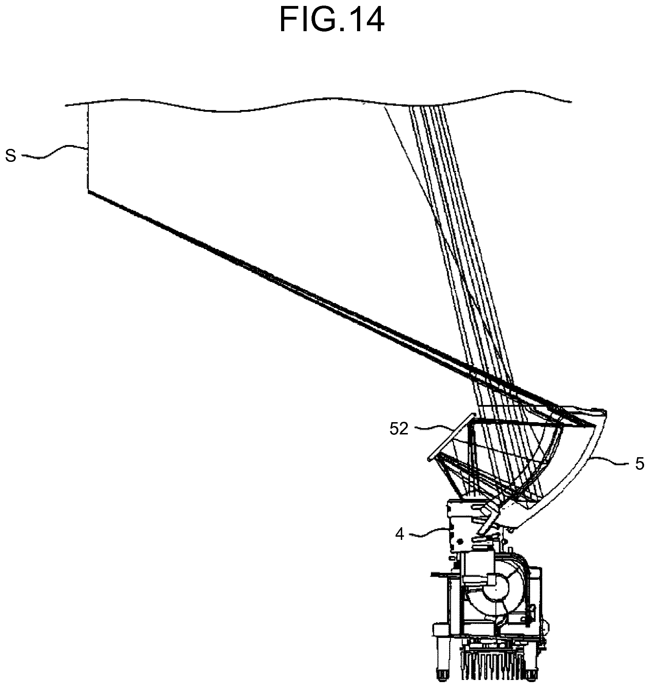

FIG. 14 is a perspective view illustrating a light path from the projection lens unit 4 to the projection surface S (screen).

The projection image formed by the DMD transmits through the projection lens unit 4 that is a first optical system, and forms an intermediate image conjugated with an image generated by the DMD 32, between the folding mirror 52 and the concave mirror 5. The intermediate image is formed between the folding mirror 52 and the concave mirror 5 that are a second optical system, as a curved surface image. Next, the light beam dispersed after forming the intermediate image, enters the concave mirror 5, made into a convergent light beam, and is projected to form an image on the projection surface S, while making the intermediate image into a "further enlarged image", by the concave mirror 5.

In this manner, the projection optical system is configured of the first optical system and the second optical system. An intermediate image is formed between the first optical system and the concave mirror 5 of the second optical system, and by enlarging and projecting the image by the concave mirror 5, it is possible to reduce the projection distance, thereby enabling to use the apparatus in small meeting rooms.

Next, cooling mechanism of the light source unit 15 will be described.

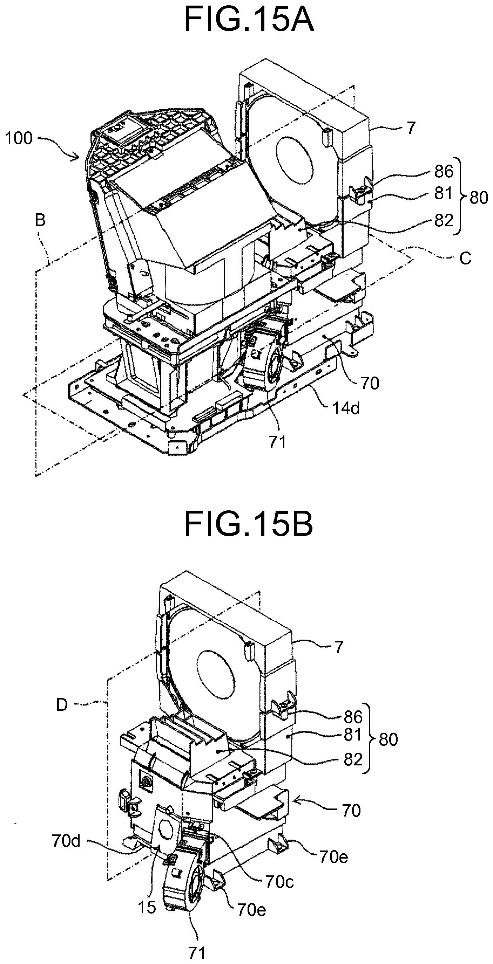

FIG. 15A is a perspective view illustrating a light source cooling mechanism that cools the light source unit 15, and the optical engine unit 100. FIG. 15B is a perspective view illustrating the light source cooling mechanism.

The light source cooling mechanism includes a light source blower 71, a light source exhaust duct 80, the exhaust fan 7, and the like. In the present embodiment, a double suction sirocco fan is used as the light source blower 71, and the outlet port of the light source blower 71 is connected to an inlet duct portion 70c having provided on the light source housing. The light source exhaust duct 80 is fixed to the light source housing 70, so as to cover the upper surface of the light source housing 70.

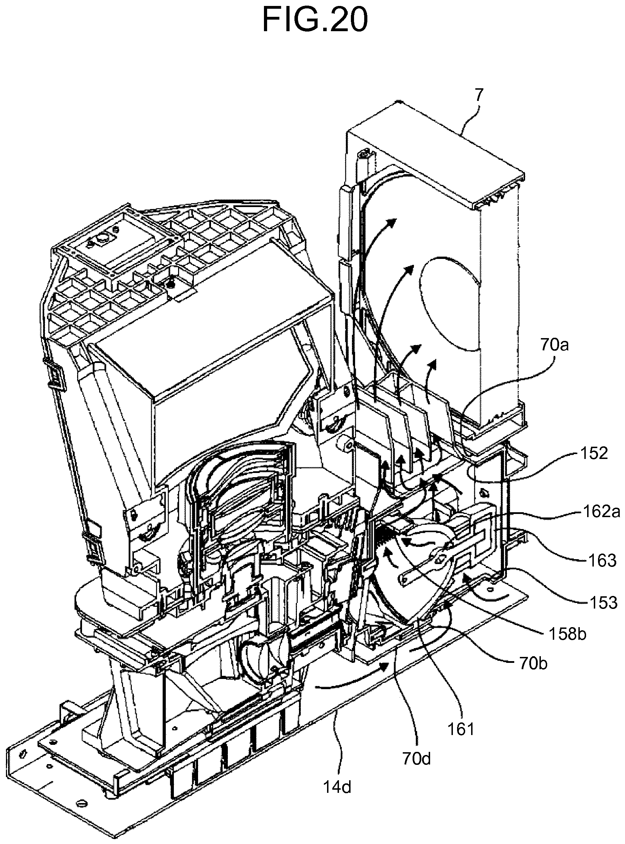

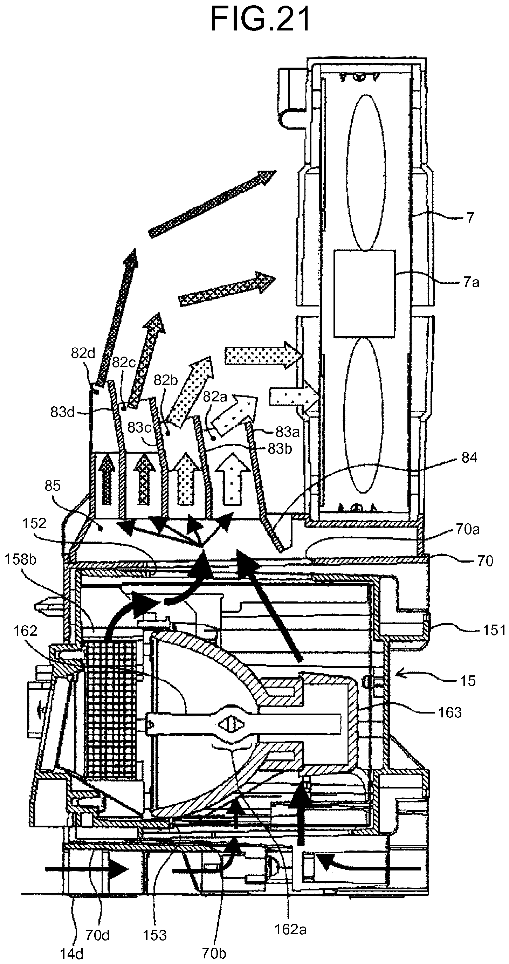

A side wall that extends downward is provided at each of both sides of a bottom surface 70d of the light source housing 70 in the longitudinal direction. Two fixing portions 70e are provided on the respective side walls with a predetermined interval therebetween. Each of the fixing portions has a through hole through which a screw passes. The bottom surface 70d of the light source housing is fixed to the lower side sheet metal portion 14d with a predetermined gap therebetween, by inserting a screw into the through hole of each fixing portion, and by screwing into the screw hole of the lower side sheet metal. As will be described below, the bottom surface 70d has an air inlet port 70b for drawing in air to cool the area outside the reflector of the light source (see FIG. 20 and FIG. 21).

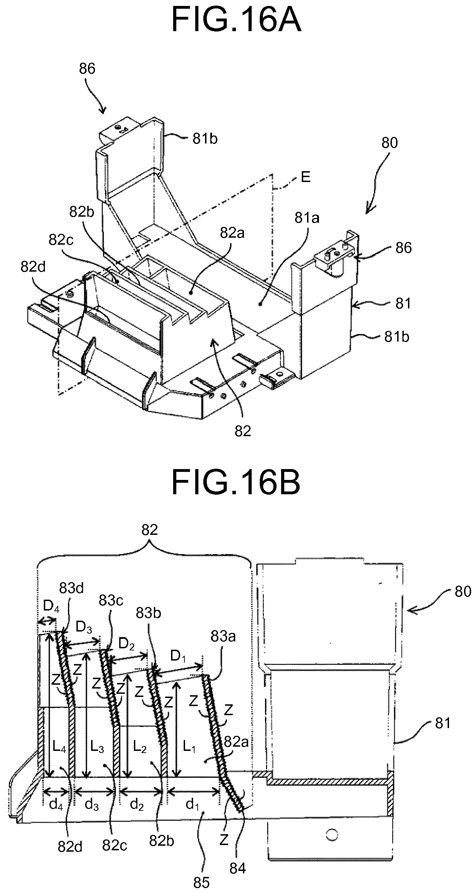

FIG. 16A is a perspective view illustrating the light source exhaust duct 80, and FIG. 16B is a sectional view of the light source exhaust duct 80 cut along an alternate long and short dash line E in FIG. 16A.

The light source exhaust duct 80 is formed of resin, and includes a fan holding portion 81 that holds the exhaust fan, an exhaust air guiding unit 82 that guides the air that has cooled the light source unit, a fan fixing portion 86 to which the exhaust fan 7 is fixed, an inflow portion 85 into which the air that has cooled the light source 160 flows in, and the like. The fan holding portion 81 includes a bottom surface 81a that faces the lower surface of the exhaust fan, and a facing surface 81b that extends straight upward from both ends of the bottom surface 81a in the longitudinal direction and that faces the side surface of the exhaust fan. The fan holding portion 81 holds the exhaust fan, so as to cover the lower side excluding the inlet port and the outlet port of the exhaust fan.

The fan fixing portion 86 to which the exhaust fan 7 is to be fixed is provided at the upper end of each facing surface 81b of the fan holding portion 81. Each fan fixing portion 86 has a screw hole, and the exhaust fan 7 is fixed to the fan fixing portions 86 with screws.

The exhaust air guiding unit 82 includes four duct portions 82a, 82b, 82c, and 82d. The four duct portions are arranged side by side in the rotation axis direction of the exhaust fan. Each of the duct portions 82a, 82b, 82c, and 82d has an inlet port that functions as an air intake port. The inlet ports are arranged toward the light source 160. The duct portions have wind guiding walls 83a, 83b, 83c, and 83d, respectively. The wind guiding walls 83a, 83b, 83c, and 83d guide the air flowing in the duct portion. Among the four duct portions, the first duct portion 82a that is arranged closest to the exhaust fan and the second duct portion 82b that is adjacent to the first duct portion 82a, are partitioned by the second wind guiding wall 83b that guides the air flowing inside the second duct portion. The second duct portion 82b and the third duct portion 82c that is adjacent to the second duct portion 82b, are partitioned by the third wind guiding wall 83c that guides the air flowing inside the third duct portion 82c. In addition, the third duct portion 82c and the fourth duct portion 82d that is located furthest from the exhaust fan, are partitioned by the fourth wind guiding wall 83d that guides the air flowing inside the fourth duct portion 82d.

As illustrated in FIG. 16B, the height of the upper ends of the wind guiding walls is increased as the wind guiding wall is further away from the exhaust fan. The relation among the lengths of duct portions satisfies L1 < L2 < L3 < L4 where the length of the first duct portion 82a is L1, the length of the second duct portion 82b is L2, the length of the third duct portion 82c is L3, and the length of the fourth duct portion 82d is L4. In other words, the length of the duct portions is gradually increased, as the duct portion is further away from the exhaust fan. In addition, the air in the duct portions is discharged toward the exhaust fan from the higher position, as the duct portion is further away from the exhaust fan.

The relation among the opening areas satisfies d1 > d2 > d3 > d4 where the opening area of the inlet port of the first duct portion 82a is d1, the opening area of the inlet port of the second duct portion 82b is d2, the opening area of the inlet port of the third duct portion 82c is d3, and the opening area of the inlet port of the fourth duct portion 82d is d4. In other words, the opening area of the inlet ports is reduced and the air is more difficult to flow in as the duct portion is further away from the exhaust fan.

The relation among the minimum sectional areas of the flow paths satisfies D1 > D2 > D3 > D4 where the minimum sectional area of the flow path of the first duct portion 82a is D1, the minimum sectional area of the flow path of the second duct portion 82b is D2, the minimum sectional area of the flow path of the third duct portion 82c is D3, and the minimum sectional area of the flow path of the fourth duct portion 82d is D4. In other words, the sectional area of the flow paths is reduced as the duct portion is further away from the exhaust fan. In addition, the air is more difficult to flow through and the influence of the suction force of the exhaust fan 7 is weaker, as the duct portion is further away from the exhaust fan.

The first wind guiding wall 83a that is arranged closest to the exhaust fan and that guides the air flowing inside the first duct portion 82a extends in the vertical direction that is orthogonal to the rotation axis direction of the exhaust fan. In addition, the first wind guiding wall 83a is inclined so as to move away from the exhaust fan toward the upper portion located downstream in the air flowing direction in the first duct portion, compared with the lower portion. The second wind guiding wall 83b, the third wind guiding wall 83c, and the fourth wind guiding wall 83d extend straight upward and then at the halfway, the guiding walls are inclined so as to move away from the exhaust fan.

The surface of a portion of each wind guiding wall that is inclined so as to move away from the exhaust fan serves as a light diffuser, and is embossed with a fine irregular pattern (hereinafter, the surface on which embossment is formed is referred to as an embossed surface Z). In the present embodiment, both surfaces of the inclined portion are the embossed surfaces Z.

A wall 84 closer to the exhaust fan, of the inflow portion 85 is also inclined so as to move away from the exhaust fan toward the upper portion. As will be described below, the wall 84 functions as a guide that guides the air that has cooled the outside of the reflector of the light source, and that flows into the inflow portion, to the first duct portion and the second duct portion. Both surfaces of the wall 84 are also the embossed surfaces Z.

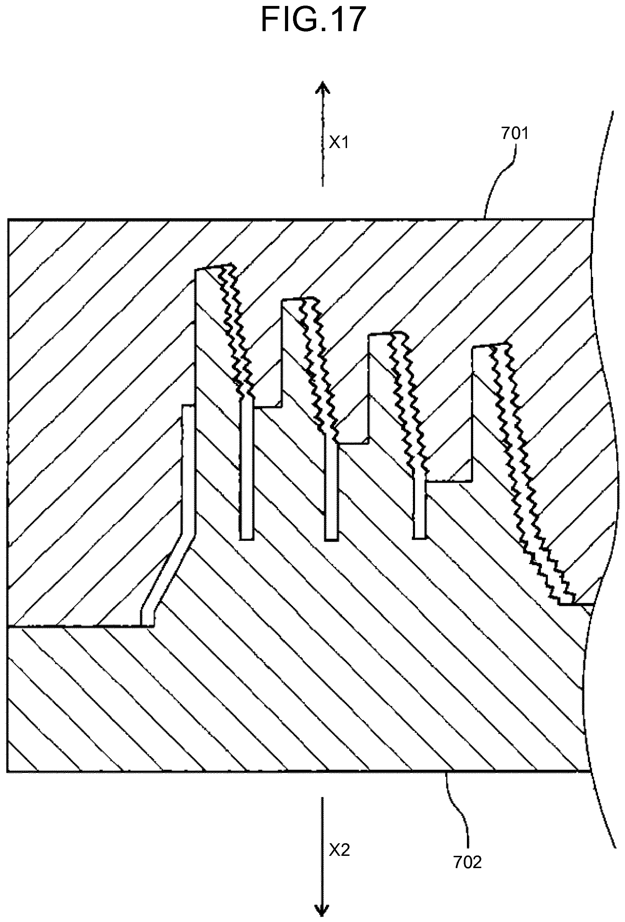

FIG. 17 is a sectional view illustrating a part of a mold for molding the light source exhaust duct 80.

The light source exhaust duct 80 is a resin injection molding product, and as illustrated in FIG. 17, at least the duct portions are molded by a first mold 701 and a second mold 702. To mold the light source exhaust duct 80 including the duct portions that have the flow path the cross section of which is in a rectangular shape, and that have some length in the direction orthogonal to the rotation axis direction of the exhaust fan 7, the moving directions X1 and X2 of the molds need to be in the same direction as the extending direction of the duct portions, due to the structure of the mold. To form an embossment on the wind guiding walls, sand blasting and the like is performed on a portion of the mold corresponding to the portion to be embossed, so as to be roughened. In this case, the embossed surface Z needs to have what is called a draft angle that is a predetermined angle inclined relative to the moving directions X1 and X2 of the mold, due to the looseness of the mold. Thus, the portion of each wind guiding wall to be embossed needs to be inclined relative to the direction toward which the duct portion is extended. As illustrated in FIG. 17, the embossed surface Z of the wind guiding wall facing the exhaust fan is formed by the first mold 701 that moves in the direction X1 in the view. Meanwhile, the embossed surface Z of the wind guiding wall that is opposite from the surface facing the exhaust fan is formed by the second mold 702 that moves in the direction X2 in the view.

The embossed surface Z may be formed on the wind guiding wall if the portion of the wind guiding wall to be embossed is inclined by a predetermined angle relative to the moving direction of the mold. Thus, the portion of the wind guiding wall to be embossed can be embossed, even if the portion of the wind guiding wall to be embossed is inclined so as to approach the exhaust fan. However, as in the present embodiment, when the portion to be embossed of the wall guiding wall is inclined so as to move away from the exhaust fan, the following advantages can be obtained, compared with when the portion of the wall guiding wall to be embossed is inclined so as to approach the exhaust fan.

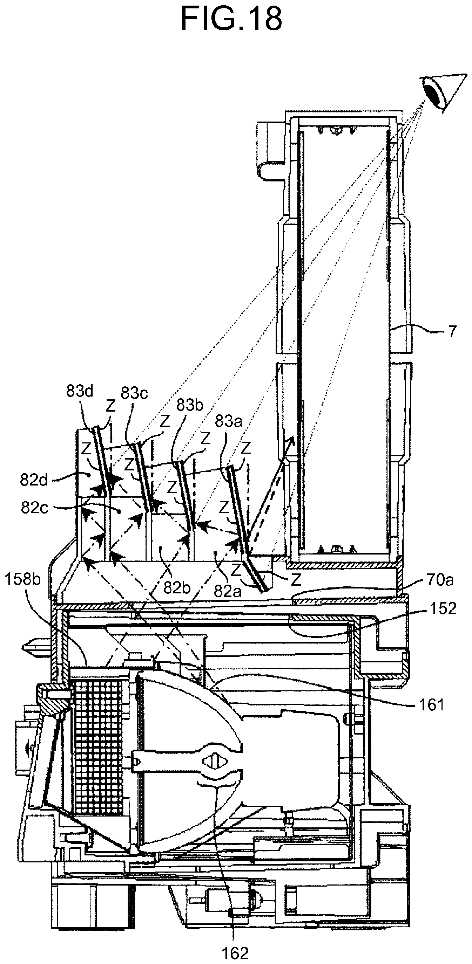

FIG. 18 is a view for explaining light leaking from the light source unit.

As illustrated in FIG. 18, a part of the light that is emitted from the light emitting unit 162a and that is directed toward the reflector 161, transmits through the reflector 161. Such light that has transmitted through the reflector 161 passes through the light source outlet port 152 of the light source unit and the housing outlet port 70a, and enters the duct portion. The light that has emitted from the light emitting unit 162a also leaks out from the outflow port 158b above the light emission side surface 151c, and enters the duct portion.

As illustrated by the dotted lines in FIG. 18, if the embossed portion of the wind guiding wall is inclined so as to approach the exhaust fan, when a user looks into the casing from the outlet port of the exterior casing, the user can see the reflector 161 of the light source. As a result, as illustrated by a solid arrow in the view, the strong light having entered the duct portion may directly leak out from the exhaust fan, without reflecting the wind guiding wall at all. In other words, the strong light that has entered the duct portion may leak out without being incident on the embossed surface Z at all, resulting in that it becomes useless to form the embossed surface Z.

However, as in the present embodiment, if the embossed portion of the wind guiding wall is inclined so as to move away from the exhaust fan, the embossed portion of the wind guiding wall covers the inside of the duct portion. As a result, even if a user looks into the casing from the outlet port of the exterior casing, the user can only see the embossed surface Z facing the exhaust fan of the wind guiding wall. Thus, the light that leaks out from the exhaust fan is the light that has at least reflected once by the embossed surface facing the exhaust fan of the wind guiding wall. The light that has been incident on the embossed surface Z is the light the intensity of which is weakened by being reflected irregularly and diffused by the fine irregular surface. Consequently, even if a user looks into the casing from the outlet port of the exterior casing, the light that reaches the user's eyes is weak light, and the user will not be dazzled. Hence, an advantage that the user will not feel uncomfortable while using the apparatus is obtained.

In addition, in the present embodiment, both sides of the wind guiding wall are embossed. Thus, it is possible to increase the number of light rays that enter the embossed surface Z a plurality of times, while the light rays pass through the duct portion. Consequently, it is possible to diffuse light a plurality of times, and further weaken the light that is leaked out from the duct portion and that is directed toward the exhaust fan.

By making the embossed portion of the wind guiding wall inclined so as to move away from the exhaust fan, the incident angle of the light that is incident on the embossed surface Z opposite from the surface that faces the exhaust fan, can be narrowed compared with when the wind guiding wall is extending straight in the vertical direction. Consequently, it is possible to increase the number of times the light reflects in the duct portion. Because the light is attenuated every time the light reflects the wind guiding wall made of resin, it is possible to further weaken the light that has leaked out from the duct portion and that is directed toward the exhaust fan. Furthermore, it is possible to increase the light that enters the embossed surface Z a plurality of times, and further weakens the light that leaks out from the exhaust fan.

Next, the flow of the air that cools the light source will be described.

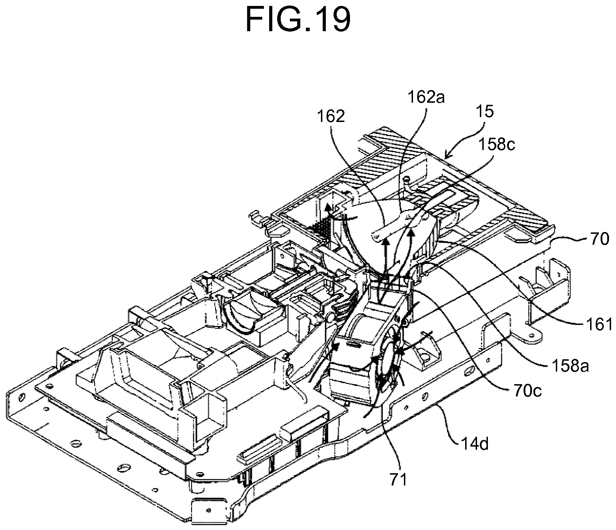

FIG. 19 is a sectional view cut along C in FIG. 15A. FIG. 20 is a sectional view cut along B in FIG. 15A. FIG. 21 is a sectional view cut along D in FIG. 15B.

As illustrated in FIG. 19, the light source blower 71 sucks in the air around the light source blower of the main body casing. Because of this suction, the pressure around the light source blower 71 of the main body casing becomes negative, and the outside air is drawn in from the third inlet port 10c that is at the lower side of the right side sheet metal portion 14e illustrated in the above FIG. 2C. The outside air that has been drawn in, flows into the heat sink 33 (see FIG. 11) that cools the DMD 32, and cools the heat sink 33. In this manner, the heat sink 33 can efficiently release the heat of the DMD 32, thereby suppressing the temperature increase of the DMD 32.

The air sucked in by the light source blower 71 (hereinafter, referred to as first air) flows into the inlet duct portion 70c of the light source housing 70 from the outlet port of the light source blower 71, passes through the inflow port 158a of the light source casing 151, and flows into the reflector 161. A wind direction plate 158c is disposed inside the reflector 161. A part of the first air that has flowed into the reflector 161 from the inflow port 158a of the light source casing 151 flows toward the light emitting unit 162a of the light emitting tube 162 because of this wind direction plate 158c, and the rest flows toward the tip of the light emitting tube 162. Thereby, the light emitting tube 162 can be cooled uniformly with the air. The first air that has cooled the light emitting tube 162 will be pushed by the light source blower and drawn in by the exhaust fan. Thus, as illustrated in FIG. 20 and FIG. 21, the first air flows outside the reflector 161 from the outflow port 158b.

In addition, as illustrated in FIG. 20 and FIG. 21, due to the suction force of the exhaust fan 7, the air inside the main body casing flows into the air inlet port 70b, from between the bottom surface 70d of the light source housing 70 and the lower side sheet metal portion 14d of the main body casing. The air that has flowed into the air inlet port 70b (hereinafter, referred to as second air) passes through the second light source suction port 153, flows into the space outside the reflector of the light source casing 151, and cools the electrode portion 163 of the light source and the like.

The first air that has cooled the inside of the reflector 161 and the second air that has cooled the electrode portion 163 of the light source flow into the inflow portion 85 of the light source exhaust duct 80, through the light source outlet port 152 of the light source casing and the housing outlet port 70a.

When a discharge lamp such as a halogen lamp, a metal halide lamp, or a high-pressure mercury lamp is used as the light source, the temperature of the light emitting tube 162 could reach 1000 degrees Celsius. Thus, the temperature of the first air that has cooled the light emitting tube 162 is also high. If the light source outlet port 152 is arranged immediately above the outflow port 158b, the first air the temperature of which is increased due to cooling the light emitting tube 162, will flow directly into the third duct portion 82c and the fourth duct portion 82d, which function as a first duct. The first air that has flowed out from the outlet ports of the third duct portion 82c and the fourth duct portion 82d, is then mixed with the low-temperature second air that has flowed through the first duct portion 82a and the second duct portion 82b, which function as a second duct. The first air and the second air are mixed above the light source exhaust duct 80, and are discharged outside the apparatus through the exhaust fan 7.

The first air is made to flow both by the pushing force of the light source blower 71 and the suction force of the exhaust fan, to cool the high-temperature light emitting tube 162 favorably. On the other hand, the second air is made to flow only by the suction force of the exhaust fan 7. Thus, compared with the second air, the flow velocity of the first air is high, and the flow rate of the first air is large. Consequently, the first air and the second air are discharged outside the apparatus without being mixed well above the light source exhaust duct 80. The second air that flows in the first duct portion 82a and the second duct portion 82b that are close to the exhaust fan 7 is mainly discharged outside the apparatus from the area below a rotation axis portion of the exhaust fan 7. Meanwhile, the first air that flows through the third duct portion 82c and the fourth duct portion 82d is discharged outside the apparatus mainly from the area above the rotation axis portion of the exhaust fan. As a result, there may occur an apparent deviation in the distribution of the temperature of the air that is discharged from the outlet port of the exterior cover.

The present applicants have developed an image projection apparatus that blows the first air of the higher temperature and the second air of the lower temperature to the axis portion of the exhaust fan 7 to mix the first air and the low-temperature second air and reduce the temperature of the first air and the second air in the main body casing and then discharges the mixed air (Japanese Patent No. 5637469). However, in such a structure, because the high-temperature first air that has cooled the light emitting tube 162 is applied to the center of the rotation of the exhaust fan 7, the temperature of the rotation axis portion of the exhaust fan 7 is increased. Because the rotation axis portion includes a bearing and the like, if the temperature of the rotation axis portion is raised, the bearing will be thermally deteriorated, thereby shortening the life of the exhaust fan. In other words, the structure that is disclosed in Japanese Patent No. 5637469 is a structure that suppresses hot spots while sacrificing the life of the exhaust fan.

On the other hand, in the structure of the present embodiment, the deviation of the distribution of the temperature of the air that is discharged from the outlet port of the exterior cover is suppressed, because the high-temperature first air is dispersed, by making the first air flow through all the duct portions.

In the present embodiment, as illustrated in FIG. 21, the light source outlet port 152 of the light source casing 151 that functions as a light source housing unit is disposed upstream (right in the view) of the outflow port 158b in the light emitting direction of the light source. Thus, the outflow port 158b and the third duct portion 82c and the fourth duct portion 82d are partitioned by the upper surface 151a of the light source casing. As a result, the flowing direction of the first air that has flowed into the light source casing 151 from the outflow port 158b is suddenly changed from the upward direction to the upstream direction of the light emitting direction of the light source. Then, due to the suction force of the exhaust fan, the flowing direction of the first air is suddenly changed from the upstream direction of the light emitting direction to the upward direction. The first air then flows toward the light source outlet port 152.

Because the flowing direction changes suddenly, the flow resistance is increased, and slows down the flow of the first air. Consequently, the difference in flow velocity between the first air and the second air is reduced, thereby easily mixing the first air and the second air. In addition, the second air flows upward and is directed toward the light source outlet port 152. Thus, the first air flows from the direction orthogonal to the flowing direction of the second air, and is directed to the light source outlet port 152. As a result, a part of the first air is mixed with the second air immediately before the light source outlet port 152, thereby reducing the temperature of the first air and the second air. Then, the first air and the second air pass through the light source outlet port 152 and the housing outlet port 70a, and flow into the inflow portion 85 of the light source exhaust duct 80.

As illustrated in FIG. 21, the first air mainly passes near the edge of the light source outlet port 152 and the housing outlet port 70a farther from the exhaust fan 7 (left in the view) to flow into the inflow portion 85 of the light source exhaust duct 80. The edges farther from the exhaust fan 7, of the housing outlet port 70a and the light source outlet port 152 are located closer to the second duct portion 82b than the center of the third duct portion 82c. Thus, the first air flows into a portion between the second duct portion 82b and the third duct portion 82c in the inflow portion 85. Meanwhile, the second air mainly passes the part of the light source outlet port 152 and the housing outlet port 70a closer to the exhaust fan (on the right in the view) to flow into the inflow portion 85 of the light source exhaust duct 80. As a result, the second air flows into a portion between the first duct portion 82a and the second duct portion 82b in the inflow portion 85.

In the present embodiment, as illustrated in FIG. 16A and FIG. 16B, the opening area of the inlet ports of the duct portions is reduced, as the duct portion is further away from the exhaust fan. Consequently, the air is more difficult to flow into the duct portion, as the duct portion is further away from the exhaust fan. In addition, the sectional area of the flow paths is reduced, as the duct portion is further away from the exhaust fan. Consequently, the air is more difficult to flow into the duct portion, as the duct portion is further away from the exhaust fan. The suction force of the exhaust fan is reduced, and the air is more difficult to flow into the duct portion, as the duct portion is further away from the exhaust fan. In the present embodiment, the opening area and the minimum flow path sectional area of the outlet port of the duct portions are reduced, as the duct portion is further away from the exhaust fan. Furthermore, air is more difficult to flow into the duct portion, as the duct portion is further away from the exhaust fan.

The second air that has flowed into the portion between the first duct portion 82a and the second duct portion 82b in the inflow portion 85, flows into the first duct portion 82a and the second duct portion 82b, for the following three reasons.
1. The air is more difficult to flow into the third duct portion 82c and the fourth duct portion 82d.
2. The first air that flows in from the location further away from the exhaust fan than the second air, prevents the second air from flowing into the third duct portion 82c and the fourth duct portion 82d.
3. The air can easily flow into the first duct portion 82a and the second duct portion 82b.

Because of the above three reasons, the second air flows into the first duct portion 82a and the second duct portion 82b. In addition, in the present embodiment, the wall 84 closer to the exhaust fan, of the inflow portion 85 is inclined so as to move away from the exhaust fan toward the upper side. Thus, the wall 84 guides the second air that has flowed toward the exhaust fan in the inflow portion 85, so that the second air flows smoothly into the first duct portion 82a and the second duct portion 82b. Consequently, it is possible to make the second air flow into the first duct portion 82a and the second duct portion 82b, while suppressing the reduction of the flow velocity.

Meanwhile, the first air that has flowed between the second duct portion 82b and the third duct portion 82c in the inflow portion 85 flows into all the duct portions 82a to 82d. This is because, as described above, the air is difficult to flow through the third duct portion and the fourth duct portion, and the suction force of the exhaust fan is also weak there. However, the air can easily flow through the first duct portion and the second duct portion, and the suction force of the exhaust fan is strong there. As a result, a part of the first air that has flowed between the second duct portion 82b and the third duct portion 82c in the inflow portion 85 flows into the first duct portion 82a and the second duct portion 82b. This is because the suction force of the exhaust fan is applied strongly, the opening area of the inlet ports is large, and the air can easily flow through the first duct portion 82a and the second duct portion 82b. Then, the rest of the first air flows into the third duct portion 82c and the fourth duct portion 82d. In this manner, the first air is dispersed and flows into the duct portions, and the flow rate of the air that flows into the duct portions will be reduced.

The following describes three methods of lowering the temperature of the high-temperature air that has cooled the light emitting tube and discharging the air outside the apparatus.
I. Mixing with low-temperature air to lower the temperature of the high-temperature air by
II. Increasing the flow path to lower the temperature of the high-temperature air
III. Discharging the high-temperature air through a wide area to reducing the amount of heat per unit area

The high-temperature first air and the low-temperature second air mix and flow into the first duct portion 82a and the second duct portion 82b described above, and the first air and the second air move through the duct portions while being mixed together. The mixed air of the first air and the second air that has come out from the duct portions is discharged outside the apparatus, from the area below a rotation axis portion 7a of the exhaust fan 7. In other words, in the first duct portion 82a and the second duct portion 82b, the high-temperature air is lowered in temperature, using the method I described above, and is discharged outside the apparatus.

To sufficiently cool the high-temperature light emitting tube 162 with air, the flow velocity of the air that flows to the light emitting tube 162 needs to be increased, and cooling air is made to flow to the light emitting tube 162 continuously. Thus, the first air that cools the light emitting tube 162 is made to flow both by the pushing force of the light source blower 71 and the air suction force of the exhaust fan 7. Meanwhile, the second air is made to flow only by the suction force of the exhaust fan 7, and the flow rate of the first air is larger than the flow rate of the second air. However, in the present embodiment, because the first air is dispersed to the four duct portions, the flow rate of the first air that flows in each duct portion is reduced. Thus, in the first duct portion 82a and the second duct portion 82b, the first air is mixed with the second air, thereby favorably reducing the temperature.

In addition, as described above, the first air flows into the inflow portion 85 in a state that the flowing direction is suddenly changed and the flow velocity is reduced, before the first air flows into the inflow portion 85. Then, a part of the first air flows into the first duct portion 82a and the second duct portion 82b. Meanwhile, the second air flows into the inflow portion 85 without the flowing direction being changed suddenly. Furthermore, the second air is guided by the wall 84 closer to the exhaust fan, of the inflow portion 85 to flows into the first duct portion 82a and the second duct portion 82b. Consequently, the second air flows into the first duct portion 82a and the second duct portion 82b, while suppressing the reduction in the flow velocity. Thus, although the flow velocity of the first air has been faster than the second air at the point when the first air and the second air are flowing inside the reflector, the flow velocity difference between the first air and the second air is reduced at the point when the first air and the second air flow into the first duct portion 82a and the second duct portion 82b. In this manner, the first air and the second air can be favorably mixed in the first duct portion 82a and the second duct portion 82b, so that the temperature can be favorably reduced for discharge.

Meanwhile, almost only the high-temperature first air flows into the third duct portion 82c and the fourth duct portion 82d, and it is not possible to lower the temperature of the high-temperature air using the method I described above. Thus, in the present embodiment, the temperature of the rest of the first air that has flowed into the third duct portion 82c and the fourth duct portion is lowered, using the method II and the method III described above, and is discharged outside the apparatus.

More specifically, to increase the flow path in the method II described above, the length of the duct portion is increased as the duct portion is further away from the exhaust fan. Thus, the lengths of the third duct portion 82c and the fourth duct portion 82d are longer than the lengths of the first duct portion 82a and the second duct portion 82b. In addition, the heights of the upper ends of the third wind guiding wall 83c that guides the air in the third duct portion 82c and the fourth wind guiding wall 83d that guides the air in the fourth duct portion 82d are larger than the heights of the first wind guiding wall 83a that guides the air in the first duct portion 82a and the second wind guiding wall 83b that guides the air in the second duct portion 82b. Thus, the air that has flowed into the third duct portion 82c and the fourth duct portion 82d is discharged above the rotation axis portion 7a of the exhaust fan. By discharging the air above the rotation axis portion 7a of the exhaust fan, it is possible to increase the length of the flow path before the air is discharged outside the apparatus, compared with when the air is discharged below the rotation axis portion 7a of the exhaust fan.

In this manner, by increasing the length of the flow path, the heat is released before the air is being discharged. Thus, it is possible to lower the temperature of the rest of the first air that has flowed into the third duct portion 82c and the fourth duct portion 82d.

The outlet ports of the third duct portion 82c and the fourth duct portion 82d are located further away from the exhaust fan, than the outlet ports of the first duct portion and the second duct portion. The outlet ports of the first duct portion and the second duct portion are located close to the exhaust fan. Thus, the air that is discharged from the first duct portion and the second duct portion is strongly drawn in by the suction force of the exhaust fan, swiftly flows toward the exhaust fan without being dispersed, and is discharged from a predetermined spot below the rotation axis portion 7a.

Meanwhile, the rest of the first air that is discharged from the third duct portion 82c and the fourth duct portion 82d is discharged at the location far away from the exhaust fan 7. Thus, the suction force of the exhaust fan 7 is weak, and the air gradually moves toward the exhaust fan 7. Furthermore, because the flow paths of the third duct portion 82c and the fourth duct portion 82d are long, the flow is sufficiently reduced by the flow path resistance. Consequently, the flow velocity of the rest of the first air that is discharged from the third duct portion 82c and the fourth duct portion 82d is significantly reduced. Hence, the rest of the first air that is discharged from the third duct portion 82c and the fourth duct portion 82d gradually moves toward the exhaust fan 7 while being dispersed, and is discharged from the entire portion above the rotation axis portion 7a of the exhaust fan 7. In this manner, the rest of the first air that is discharged from the third duct portion 82c and the fourth duct portion 82d is widely dispersed and thus the amount of heat per unit area is reduced, thereby lowering the temperature of the air that is discharged from the exhaust fan 7. In this manner, the temperature of the rest of the high-temperature first air that has flowed into the third duct portion 82c and the fourth duct portion 82d is lowered in the casing, using the method II described above. In addition, the amount of heat per unit area is reduced, using the method III described above. Consequently, the rest of the first air is discharged from the exhaust fan, while the temperature thereof is lowered.

In this manner, in the present embodiment, the opening area of the outlet ports of the first duct portion and the second duct portion is increased, where the pulling power of the exhaust fan 7 is strong. Consequently, not only the low-temperature second air but also the high-temperature first air will be drawn in, and the two kinds of air with different temperatures will be mixed. The opening area of the inlet ports of the third duct portion 82c and the fourth duct portion 82d is reduced, where the pulling power of the exhaust fan 7 is weak. Consequently, the flow rate of the high-temperature first air to be drawn into the third duct portion 82c and the fourth duct portion 82d will be limited. In addition, the heights of the third wind guiding wall 83c and the fourth wind guiding wall 83d are increased to form an environment in which the temperature of the first air is easily lowered. Furthermore, the amount of heat per unit area is reduced, by causing the high-temperature first air that is discharged from the third duct portion 82c and the fourth duct portion 82d to disperse while traveling toward the exhaust fan, and by discharging the first air from the wide area of the upper half of the exhaust fan 7. As a result, in the temperature distribution of the air that is discharged from the exhaust fan 7, it is possible to discharge the hot air outside the apparatus, in a uniform temperature distribution without a large deviation.

The flow rate of the first air made to flow into each duct portion can be adjusted, by the opening area of the inlet port of each duct portion and the locations of the edges further from the exhaust fan (on the left in the view), of the light source outlet port 152 and the housing outlet port 70a. More specifically, to increase the flow rate of the first air to flow into the first duct portion and the second duct portion, the opening area of the inlet ports of the first duct portion and the second duct portion is increased, or the opening area of the inlet ports of the third duct portion and the fourth duct portion is reduced. In addition, the location of the edges further from the exhaust fan (on the left in the view), of the light source outlet port 152 and the housing outlet port 70a may be brought closer to the exhaust fan. In this manner, the first air that flows into the inflow portion 85 may be changed to the exhaust fan side, and the first air easily flows into the first duct portion and the second duct portion. Thus, it is possible to increase the flow rate of the first air that flows into the first duct portion and the second duct portion.

Conversely, to increase the flow rate of the first air to flow into the third duct portion and the fourth duct portion, the inlet ports of the first duct portion and the second duct portions may be reduced, or the inlet ports of the third duct portion and the fourth duct portion may be increased, in a manner opposite to as described above. The locations of the edges further from the exhaust fan (on the left in the view), of the light source outlet port 152 and the housing outlet port 70a may be further moved away from the exhaust fan.

In the present embodiment, there are two duct portions (first duct portion and second duct portion) to which the first air and the second air flow in. However, the duct portion to which the first air and second air flow in may be one or three or more. In addition, there are two duct portions (third duct portion and fourth duct portion) to which only the first air flows in. However, the duct portion to which only the first air flows in may be one or three or more.

In the present embodiment, the opening area of the inlet ports is reduced as the duct portion is further away from the exhaust fan 7. However, the opening areas of the inlet ports of the third duct portion and the fourth duct portion may be equal. If the first air does not flow into the fourth duct portion nearly at all, the opening area of the inlet port of the fourth duct portion may be larger than the opening area of the inlet port of the third duct portion. However, even in such a structure, the opening area of the inlet ports of the third duct portion and the fourth duct portion is made smaller than the opening area of the inlet ports of the first duct portion and the second duct portion. In addition, for example, if most of the second air flows into the first duct portion and hardly flows into the second duct portion, the opening area of the inlet port of the second duct portion may be made equal to or larger than the opening area of the inlet port of the first duct portion.

In the present embodiment, the length of the duct portion is increased as the duct portions are further away from the exhaust fan. However, the lengths of the third duct portion and the fourth duct portion may be any length as long as the lengths are longer than the lengths of the first duct portion and the second duct portion. In addition, the lengths of the third duct portion and the fourth duct portion may be equal. The lengths of the first duct portion and the second duct portion may also be equal.

A plurality of boards are disposed in the casing. More specifically, an operation board for controlling an operation unit that is operated by a user, a connection circuit board for controlling the connection with an external device such as a personal computer, a ballast board that functions as a light source drive circuit board for supplying stable power (electric current and voltage) to the light source 160 and that drives the light source, a control board that controls the entire projector, a power supply circuit board that supplies power to each of the boards in the apparatus, and the like are arranged in the casing. Electric elements such as coils, capacitors, and resistors are mounted on these boards. Some of the electric elements have a large heating value or a low rated temperature, and the temperature of some of the electric elements may reach the rated temperature or higher, if not cooled. In particular, because a high voltage of up to 380 V is applied to the light source, electric elements with a large heating value that easily reach the rated temperature, are mounted on the power supply circuit board and the ballast board. The power supply circuit board includes a circuit that increases the voltage of the commercial power supply (100 V) up to 380 V. The ballast board drives the light source to which a voltage up to 380 V is supplied.

In general, a board mounted with electric elements that may reach the rated temperature if not cooled, is cooled by air. However, when a projector is used in a quiet environment such as in a home theater and the like, wind-whistle sound of the fan or the like becomes a noise. Consequently, the number of fans and the rotation speed of the fan need to be suppressed. In the present embodiment, the board is cooled by generating cooling air for cooling the board, only by the suction force of the exhaust fan 7, so as to reduce the noise of the projector. In addition, to reduce noise, it is preferable to reduce the rotation speed of the exhaust fan as much as possible. If the size of the exhaust fan is increased, more air can be discharged with a low rotation speed, and the flow rate of the board cooling air can be increased. Thus, it is possible to cool the board favorably. However, if the size of the exhaust fan is increased, the size of the apparatus will also be increased. As a result, portability of the projector may be deteriorated. Thus, it is not preferable to increase the size of the exhaust fan. To favorably suppress the temperature increase of the board, while suppressing the size of the exhaust fan from being increased, and suppressing the rotation speed of the exhaust fan, the board needs to be cooled efficiently. Thus, in the present embodiment, the boards are arranged in such a way so as to cool the boards efficiently. Hereinafter, the detailed description will be made with reference to the drawings.

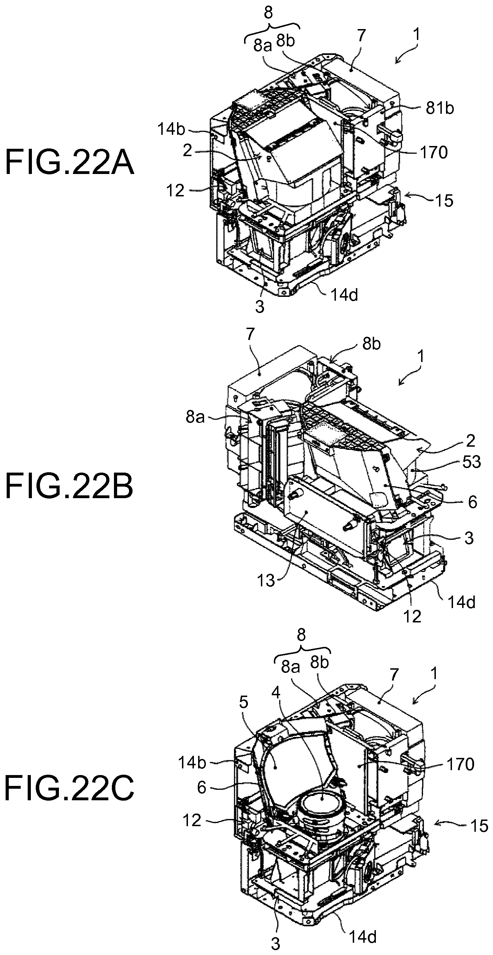

FIG. 22A is a perspective view of the projector when viewed from the rear, from which the upper side sheet metal portion 14a, the rear side sheet metal portion 14c, and the right side sheet metal portion 14e of the main body casing 14 are removed. FIG. 22B is a front side perspective view illustrating the inside of the main body casing of the projector. FIG. 22C is a rear side perspective view illustrating the inside of the main body casing of the projector from which the mirror bracket 53 of the projection optical unit is removed.

In the present embodiment, a power supply unit 8 that supplies power to the control board and the ballast board is arranged above the light source unit 15. The power supply unit 8 includes the main power supply unit 8a including a main power supply circuit board, and the sub-power supply unit 8b including a sub-power supply circuit board. As illustrated in FIG. 22A, the main power supply unit 8a is fixed to the front side sheet metal portion 14b of the main body casing, and the sub-power supply unit 8b is fixed to the rear side sheet metal portion 14c of the main body casing. In the present embodiment, the main power supply unit 8a and the sub-power supply unit 8b are each fixed at a position that does not face the air suction port of the exhaust fan 7. Thus, it is possible to suppress the rotation speed of the exhaust fan to discharge a desired amount of air, without the main power supply unit 8a and the sub-power supply unit 8b interrupting the suction force of the exhaust fan 7. Thereby, the heat generation components in the main body casing such as the light source can be cooled while suppressing the rotation speed of the exhaust fan.

A light source driving unit 12 including a ballast board that functions as a light source drive circuit board, is fixed on the surface facing the projection optical unit 2 of the front side sheet metal portion 14b of the main body casing. In addition, as illustrated in FIG. 22C, a resin plate 170 is provided so as to separate space where the projection optical unit 2 and the power supply unit 8 are disposed.

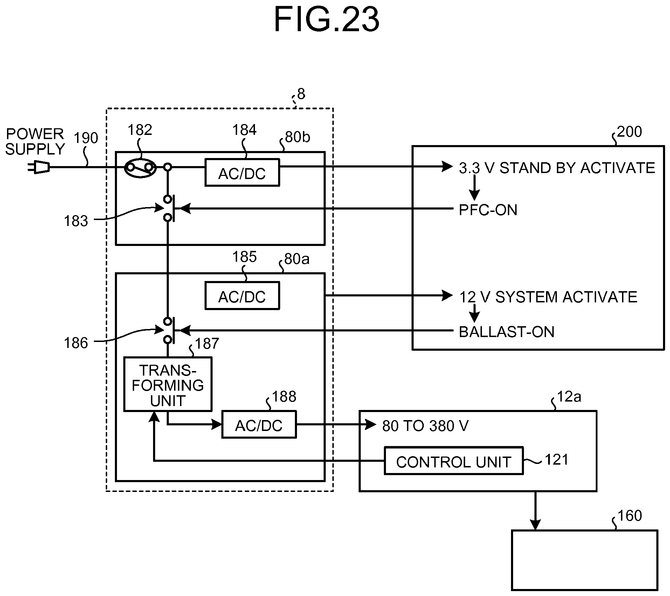

FIG. 23 is a block diagram illustrating how power is supplied.

As illustrated in FIG. 23, a sub-power supply circuit board 80b of the sub-power supply unit 8b includes a power supply switch 182, a power factor correction (PFC) switching unit 183, and an activation voltage conversion unit 184 that converts alternating current voltage supplied from a power supply cable 190 to direct current voltage, and supplies the direct current voltage of 3.3 V to a control board 200.

In addition, a main power supply circuit board 80a of the main power supply unit 8a includes a control voltage conversion unit 185 that converts alternating current voltage supplied from the power supply cable 190 to direct current voltage, and supplies the direct current voltage of 12 V to the control board 200. The main power supply circuit board 80a also includes a ballast switching unit 186, a transforming unit 187 that transforms the alternating current voltage of 100 V to a predetermined voltage, and a ballast voltage conversion unit 188 that converts the alternating current voltage adjusted by the transforming unit 187 to direct current voltage, and that supplies a predetermined direct current voltage to the ballast board 12a. In the present embodiment, the transforming unit 187 adjusts the voltage of 80 V through 380 V, and the circuit that forms the transforming unit 187 includes a field-effect transistor (FET) 284 (see FIG. 26) that serves as an electric element.

When a plug of the power supply cable 190 is inserted into an outlet, the power supply switch 182 is turned ON, and alternating current voltage is applied to the sub-power supply circuit board 80b, the direct current voltage of 3.3 V is applied to the control board 200 from the activation voltage conversion unit 184. When the direct current voltage of 3.3 V is applied, for example, the control board 200 investigates the temperature that has been detected by a temperature detecting unit such as a thermistor provided on a predetermined location in the apparatus, and the like. If it is determined that the apparatus is in a normal state, the PFC switching unit 183 of the sub-power supply circuit board 80b is turned ON.

When the PFC switching unit 183 is turned ON, the alternating current voltage from the power supply cable 190 is supplied to the main power supply circuit board 80a. When the alternating current voltage is supplied to the main power supply circuit board 80a, the direct current voltage of 12 V is applied to the control board 200 from the control voltage conversion unit 185. For example, when the direct current voltage of 12 V is applied, the control board 200 checks the temperature of the light source 160, and the like. If there is no abnormality in the light source 160 and the like, the ballast switching unit 186 of the main power supply circuit board 80a is turned ON.

When the ballast switching unit 186 of the main power supply circuit board 80a is turned ON, the alternating current voltage from the power supply cable 190 is applied to the transforming unit 187, and the transforming unit 187 increases the alternating current voltage up to 380 V. Next, the ballast voltage conversion unit 188 converts the alternating current voltage to the direct current voltage, and the direct current voltage is supplied to the ballast board 12a. At the ballast board 12a, the direct current voltage is controlled so that stable power (electric current and voltage) is supplied to the light source 160, and the direct current voltage of 380 V is applied to the light source 160. Thus, the light source is lighted. When the light source is lighted, a control unit 121 of the ballast board 12a controls the transforming unit 187, and the transforming unit 187 supplies the alternating current voltage that is adjusted to between 80 V and 90 V, to the ballast voltage conversion unit 188. Then, as described above, after the ballast voltage conversion unit 188 converts the alternating current voltage to the direct current voltage, at the ballast board 12a, the direct current voltage is controlled so that stable power (electric current and voltage) is supplied to the light source. For example, if the rated power of the light source is 270 W, the voltage between 80 V and 90 V, and the electric current between 3.0 A to 3.4 A are supplied to the light source.

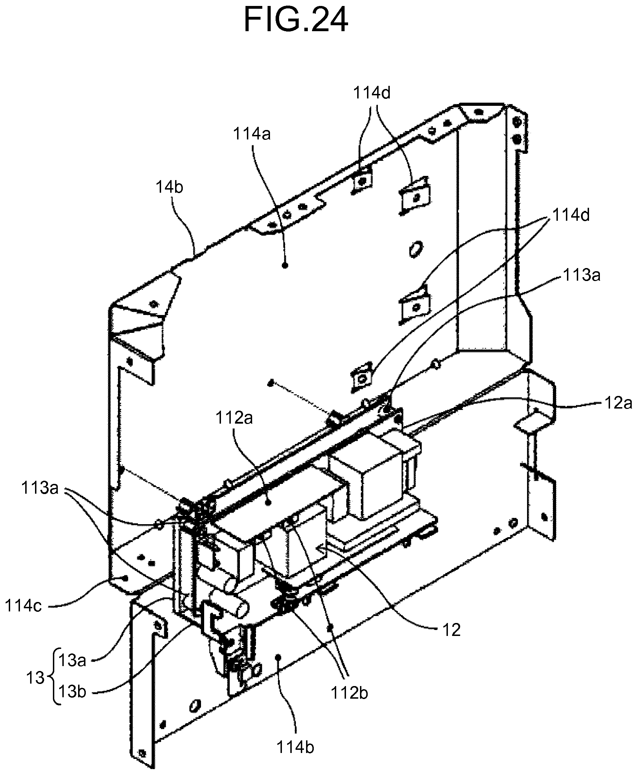

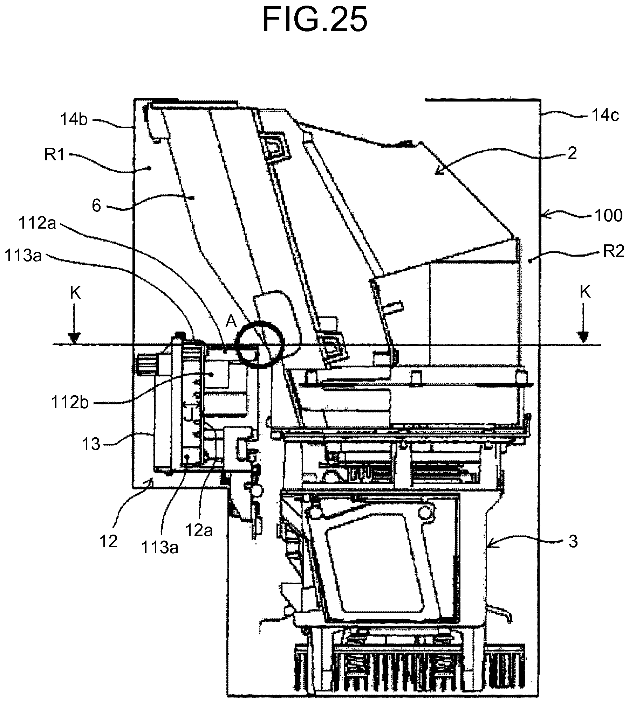

FIG. 24 is a perspective view illustrating the front side sheet metal portion 14b and the light source driving unit 12. FIG. 25 is a side view illustrating the optical engine unit 100 and the light source driving unit 12.

As illustrated in FIG. 24, the light source driving unit 12 is a light source drive circuit board, and includes the ballast board 12a that is a power stabilizing circuit board, and a ballast holder 13 that holds the ballast board 12a. The ballast holder 13 includes a board fixing portion 13a to which the ballast board 12a is fixed, and a fixation portion 13b that extends from the lower end of the board fixing portion 13a toward the rear side.

An upper surface portion 114a of the front side sheet metal portion 14b is set forward, compared with a lower surface portion 114b. The board fixing portion 13a of the ballast holder 13 is fixed to the upper surface portion 114a of the front side sheet metal portion 14b with screws. The fixation portion 13b is fixed to a stepped surface portion 114c that connects the upper surface portion 114a and the lower surface portion 114b of the front side sheet metal portion 14b, and that is orthogonal to the vertical direction, with screws.

Each of the four corners of the board fixing portion 13a of the ballast holder 13 has a screw fastening portion 113a that extends toward the rear side relative to the board fixing portion 13a. Thus, as illustrated in FIG. 25, the ballast board 12a is fixed to the board fixing portion 13a with screws, with a predetermined gap J relative to the board fixing portion 13a.

Among the electric elements that are mounted on the ballast board 12a, a heat sink 112a is fixed on an electric element 112b that reaches the rated temperature quickly. The heat sink 112a releases the heat of the electric element 112b, and prevents the electric element 112b from reaching the rated temperature. When the ballast board 12a is fixed to the ballast holder 13, the heat sink 112a is arranged so that the heat sink 112a is placed at the uppermost part of the board. As illustrated as A in FIG. 25, when the ballast board 12a is fixed to the ballast holder 13, a gap between the upper portion of the ballast board 12a and the rear side of the concave mirror (free mirror bracket 6) becomes the narrowest part, and the heat sink 112a is disposed in the narrow part. The air flow velocity is increased when the air flows from a wide space into the narrow space. Thus, the flow velocity of the board cooling air that has been drawn in from the first inlet port 10a with a wide opening area is increased, when the board cooling air passes through the narrow space enclosed by A in FIG. 25. Thus, it is possible to increase the flow of the board cooling air that passes the surface of the heat sink 112a, thereby favorably cooling the heat sink 112a with the board cooling air. Consequently, it is possible to increase the heat dissipation efficiency of the heat sink 112a. As a result, it is possible to favorably release the heat of the electric element 112b that reaches the rated temperature quickly with the heat sink 112a, and prevent the electric element 112b from reaching the rated temperature or higher.

As illustrated in FIG. 22C, the concave mirror 5 reflects a projection image that is input to the rear obliquely upward. For this purpose, the concave mirror 5 is arranged in an inclining manner with respect to the vertical direction, so that the lower side of the concave mirror 5 is placed inside the casing than the upper side. In addition, the free mirror bracket 6 that holds the concave mirror 5 is in a concave shape along the curve of the rear surface of the concave mirror 5 in FIG. 22B. Similar to the concave mirror 5, the free mirror bracket 6 is fixed to the mirror bracket 53 in an inclining manner with respect to the vertical direction. As a result, a large dead space (gap) is generated between a portion at the lower side of the concave mirror (free mirror bracket 6) and the front side sheet metal portion 14b (more precisely, the upper surface portion 114a of the front side sheet metal portion) that is parallel to the vertical direction. Because of this large dead space, the cooling air that has been drawn in from the first inlet port 10a (see FIG. 2B and FIG. 2C) on the right side sheet metal portion 14e flows easily toward the gap between the front side sheet metal portion 14b and the rear side of the concave mirror.

In the present embodiment, the light source driving unit 12 is disposed in the large dead space (gap) between the portion at the lower side of the concave mirror (free mirror bracket 6) and the front side sheet metal portion 14b (more precisely, the upper surface portion 114a of the front side sheet metal portion). By disposing the light source driving unit 12 in the large dead space through which the cooling air flows easily, it is possible to favorably cool the ballast board 12a of the light source driving unit 12, while preventing the apparatus from increasing in size.

In addition, as illustrated in FIG. 24, the upper surface portion 114a of the front side sheet metal portion 14b has four main power supply unit fixation portions 114d that are inclined relative to the upper surface portion 114a.

FIG. 26 is a perspective view illustrating the front side sheet metal portion 14b and the main power supply unit 8a. As illustrated in FIG. 26, the main power supply unit 8a includes the main power supply circuit board 80a, and a main power supply holder 16 to which the main power supply circuit board 80a is fixed. When the main power supply holder 16 is fixed to the main power supply unit fixation portions 114d that are provided on the upper surface portion 114a of the front side sheet metal portion 14b with screws, the main power supply unit 8a is fixed to the front side sheet metal portion 14b. A coil 281, a compressor 282, and a transformer 283 are mounted on the front surface of the main power supply circuit board 80a. The field-effect transistor (FET) 284 is mounted on the rear surface of the main power supply circuit board 80a. The main body of the field-effect transistor 284 is fixed to a heat sink 285 that faces the rear surface of the main power supply circuit board 80a with a predetermined interval therebetween. Because the heat sink 285 is fixed to the field-effect transistor 284 that is mounted on a circuit of the transforming unit 187 that may reach the rated temperature quickly, it is possible to release the heat of the field-effect transistor 284 by the heat sink 285, and prevent the field-effect transistor 284 from reaching the rated temperature.

The main power supply holder 16 holds the main power supply circuit board 80a. In addition, the heat sink 285 is held in the main power supply holder 16, so as to face the rear surface of the main power supply circuit board 80a with a predetermined interval therebetween.

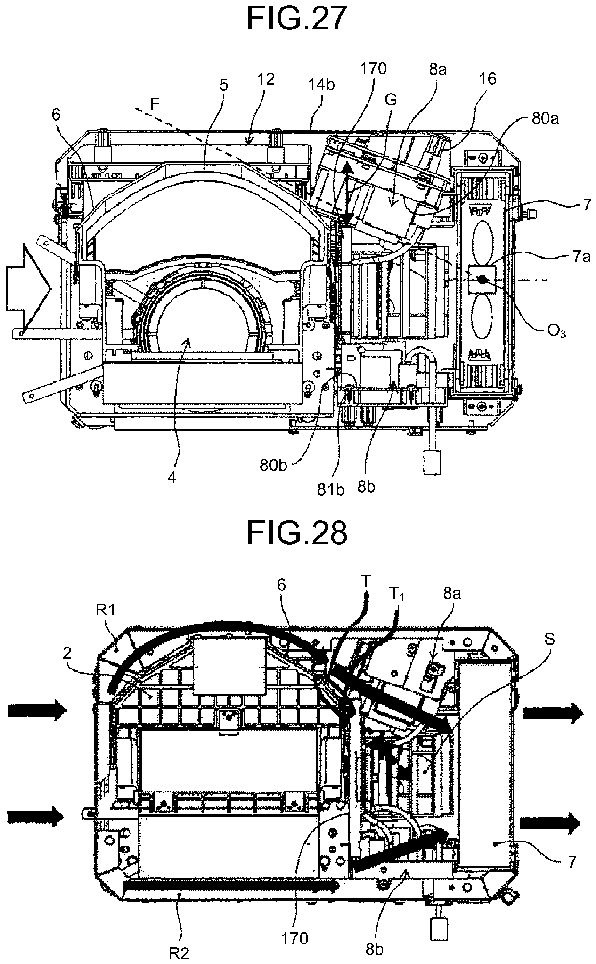

FIG. 27 is a view for explaining the inclination of the main power supply circuit board.

The main power supply circuit board 80a is fixed to the front side sheet metal portion 14b so as to incline relative to the upper surface portion 114a of the front side sheet metal portion 14b. More specifically, as illustrated in FIG. 27, the main power supply circuit board 80a is fixed to the upper surface portion 114a of the front side sheet metal portion 14b in an inclining manner so that the board surface of the main power supply circuit board 80a is substantially parallel with a tangent F of the free mirror bracket 6 that passes through a rotation center O3 of the exhaust fan 7.

In addition, a sectional area G between the resin plate 170 and the main power supply circuit board 80a is smaller than the sectional area of the first inlet port 10a (see FIG. 2B and FIG. 2C).

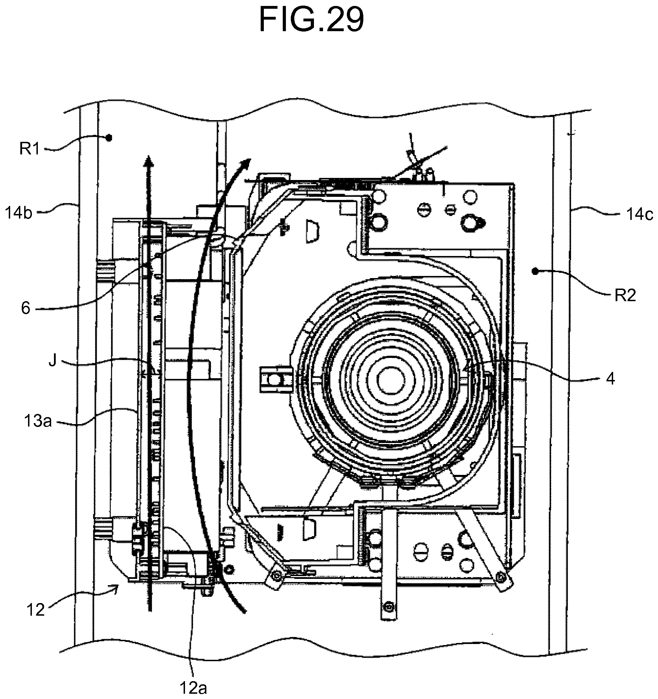

FIG. 28 is a view illustrating a flow of board cooling air in the main body. FIG. 29 is a sectional view cut along a line K-K in FIG. 25. The outside air is drawn in from the first inlet port 10a and the second inlet port 10b provided on the main body casing 14 illustrated in FIG. 2B and FIG. 2C described above, by the suction force of the exhaust fan 7. The first inlet port 10a is provided at the front side (concave mirror side) than the center portion of the right side sheet metal portion 14e in the longitudinal direction. Thus, the outside air that has been drawn in from the first inlet port 10a flows into a first board cooling flow path R1 that is formed of a gap between the rear side of the concave mirror 5 and the front side sheet metal portion 14b. In addition, the outside air that has been drawn in from the second inlet port 10b and around the front side of the operational opening 18 flows into the first board cooling flow path R1, after flowing along the right side surface of the optical engine unit.

The second inlet port 10b, the operational opening 18, and the third inlet port 10c extend to the vicinity of the rear end of the right side sheet metal portion 14e, and the opening of the third inlet port 10c at the vicinity of the rear end is increased. The outside air that has been drawn in from the vicinity of the rear end of the second inlet port 10b, the operational opening 18, and the third inlet port 10c flows to a second board cooling flow path R2 that is formed of a gap between the projection optical unit and the rear side sheet metal portion 14c.

As illustrated in FIG. 25, the first board cooling flow path R1 is wider than the second board cooling flow path R2. Thus, the suction force of the exhaust fan 7 is more strongly applied to the first board cooling flow path R1 than the second board cooling flow path R2. As illustrated in FIG. 2C, the first inlet port 10a with a large opening area is provided closer to the concave mirror 5 than the center (alternate long and short dash line in the view) of the right side sheet metal portion 14e. Thus, the total opening area of the inlet ports of the right side sheet metal portion is larger in the half closer to the concave mirror, of the right side sheet metal portion 14e. Consequently, a large amount of air is drawn into the first board cooling flow path R1 and flows through the first board cooling flow path R1. As a result, the flow rate of the board cooling air is larger in the first board cooling flow path R1 than in the second board cooling flow path R2.

In the present embodiment, the light source driving unit 12 and the main power supply circuit board 80a are disposed in the first board cooling flow path R1 with a large flow rate. The light source driving unit 12 includes the ballast board 12a mounted with the electric element 112b that may reach the rated temperature of the element quickly. The main power supply circuit board 80a includes the field-effect transistor 284 that is mounted on the circuit of the transforming unit 187 that may reach the rated temperature quickly. Thus, it is possible to favorably cool the ballast board 12a and the main power supply circuit board 80a, and prevent the electric element 112b and the field-effect transistor 284 from reaching the rated temperature or higher.

In addition, as described above, the ballast board 12a is fixed to the board fixing portion 13a with screws, with the predetermined gap J relative to the board fixing portion 13a of the ballast holder 13. Thus, as illustrated in FIG. 29, a part of the outside air that is drawn in from the first inlet port 10a and the like flows to the gap J. Consequently, it is possible to cool the rear surface (surface opposite from the surface on which the electric elements are mounted) of the ballast board 12a with air, and further favorably cool the ballast board 12a.

As illustrated in FIG. 28, the board cooling air that has flowed into the first board cooling flow path R1 flows along the curved shape of the free mirror bracket 6, and flows into the space where the power supply unit 8 is disposed, by the suction force of the exhaust fan 7. The board cooling air that has flowed into the second board cooling flow path R2 flows along the mirror bracket 53 of the projection optical unit, and flows into the space where the power supply unit 8 is disposed, by the suction force of exhaust fan 7.

In the present embodiment, the resin plate 170 is provided to separate the space where the power supply unit 8 is disposed, and the projection optical unit 2. By providing the resin plate 170, an enclosed area T of the resin plate 170 located upstream of the exhaust fan 7 in the exhaust direction will not be affected by the suction force of the exhaust fan 7. As a result, the board cooling air that has flowed into the first board cooling flow path R1 will not flow along the curved shape of the free mirror bracket 6, to a downstream end T1 of the free mirror bracket 6 in the air flowing direction. Instead, the board cooling air flows along the main power supply circuit board 80a at the upstream of the downstream end T1, by the suction force of the exhaust fan 7. In this manner, as illustrated by the dotted line in FIG. 28, it is possible to prevent the air flow from separating from the main power supply circuit board 80a. In addition, the first board cooling flow path R1 becomes a flow path that flows along the main power supply circuit board 80a. As a result, it is possible to favorably cool the main power supply circuit board 80a.

A part of the board cooling air that has flowed to the main power supply circuit board 80a flows along the front surface of the main power supply circuit board 80a, and cools the coil 281, the compressor 282, and the transformer 283 that are mounted on the front surface of the main power supply circuit board 80a. The rest of the board cooling air flows into a gap between the rear surface of the main power supply circuit board 80a and the heat sink 285. The board cooling air that has flowed into the gap between the rear surface of the main power supply circuit board 80a and the heat sink 285 cools the rear surface of the main power supply circuit board 80a, the heat sink 285, and the field-effect transistor 284. The air that has flowed along the main power supply circuit board is discharged outside the apparatus by the exhaust fan 7.

The air that flows through the second board cooling flow path R2 flows along the sub-power supply circuit board 80b, cools the sub-power supply circuit board 80b, and is discharged outside the apparatus by the exhaust fan 7.

In the present embodiment, the main power supply circuit board 80a includes the transforming unit 187. The field-effect transistor 284 that is mounted on the circuit of the transforming unit 187 is an electric element that reaches the rated temperature first, among the electric elements mounted on the power supply circuit boards (main power supply circuit board and sub-power supply circuit board). In this manner, the main power supply circuit board 80a including the transforming unit 187 with the field-effect transistor 284 serving as an electric element that reaches the rated temperature first in the power supply circuit board, is disposed in the first board cooling flow path R1 with a large air flow rate. Consequently, it is possible to favorably cool the main power supply circuit board 80a, and prevent the field-effect transistor 284 from reaching the rated temperature.

In addition, in the present embodiment, the heat sink 285 that releases the heat of the field-effect transistor 284 is provided with a predetermined interval relative to the rear surface of the main power supply circuit board 80a. The field-effect transistor 284 is cooled, by making the board cooling air flow into the narrow gap between the rear surface of the main power supply circuit board 80a and the heat sink 285. As described above, because the air flow velocity is increased when the air passes through a narrow space, the flow velocity of the board cooling air that flows into the narrow gap between the rear surface of the main power supply circuit board 80a and the heat sink 285 is increased. As a result, it is possible to favorably cool the heat sink 285 and the field-effect transistor 284 with the board cooling air, and suppress the field-effect transistor 284 from reaching the rated temperature.

In the present embodiment, the size of the heat sink 285 is equivalent to the size of the main power supply circuit board 80a. Thus, it is possible to release the heat of the field-effect transistor at a large area, and favorably suppress the temperature increase of the field-effect transistor. In addition, the main body of the field-effect transistor is separated from the rear surface of the main power supply circuit board. Consequently, it is possible to prevent the heat of the electric elements such as the coil 281 and the compressor 282 that are mounted on the front surface of the main power supply circuit board 80a from transferring to the main body of the field-effect transistor 284 through the board. As a result, it is possible to suppress the temperature increase of the field-effect transistor 284.

In addition, the field-effect transistor 284 is mounted on the lower side of the main power supply circuit board 80a. The flow rate of the lower side of the main power supply circuit board 80a is large, because the board cooling air that has flowed into the large dead space (gap) between the portion at the lower side of the concave mirror (free mirror bracket 6) and the front side sheet metal portion 14b flows on the lower side of the main power supply circuit board 80a. Thus, it is possible to favorably cool the field-effect transistor 284.

Alternatively, the field-effect transistor 284 may be mounted on the upper side of the main power supply circuit board 80a. As illustrated in FIG. 24, the light source driving unit 12 is fixed to the lower side of the upper surface portion 114a of the front side sheet metal portion 14b. Thus, the low-temperature air that is not heated by the heat of the ballast board 12a flows on the upper side of the main power supply circuit board 80a. Consequently, when the field-effect transistor 284, which is an electric element that easily reaches the rated temperature, is mounted on the upper side of the main power supply circuit board 80a, it is possible to cool the field-effect transistor 284 with the board cooling air the temperature of which is not increased by the heat of the ballast board 12a.

Meanwhile, only the activation voltage conversion unit 184 that supplies the direct current voltage of 3.3 V is mounted on the sub-power supply circuit board 80b. Thus, the heating value of the electric element is relatively small, and does not reach the rated temperature easily. Consequently, even if the sub-power supply circuit board is disposed at the side where the flow rate is small, it is possible to favorably cool the electric element on the sub-power supply circuit board. Thereby, the power supply circuit boards of the power supply unit 8 can be efficiently cooled, and even if the flow rate of the board cooling air that flows inside the casing is reduced, it is possible to favorably cool the power supply circuit boards of the power supply unit 8. Hence, it is possible to suppress the rotation speed of the exhaust fan 7 and the noise of the apparatus, without using a large exhaust fan 7, and suppress the apparatus from increasing in size. In addition, it is possible to efficiently cool the power supply circuit boards of the power supply unit 8, only by the suction force of the exhaust fan 7. As a result, it is possible to reduce the number of components, and reduce the cost of the apparatus.

In the present embodiment, as illustrated in the above FIG. 27, the main power supply circuit board 80a is fixed to the upper surface portion 114a of the front side sheet metal portion 14b in an inclining manner so that the board surface of the main power supply circuit board 80a is substantially parallel with the tangent F of the free mirror bracket 6 that passes through the rotation center O3 of the exhaust fan 7. The board cooling air in the first board cooling flow path R1 that has flowed through the space in which the power supply unit 8 is disposed, flows toward the rotation center O3 of the exhaust fan 7 by the suction force of the exhaust fan 7. Thus, in the present embodiment, the board surface of the main power supply circuit board 80a is substantially parallel with the tangent F of the free mirror bracket 6 that passes through the rotation center O3 of the exhaust fan 7. Consequently, it is possible to dispose the main power supply circuit board 80a along the flow direction of the air that has flowed along the curved shape of the free mirror bracket 6 of the first board cooling flow path R1. As a result, it is possible to make the air flow to the main power supply circuit board 80a, without reducing the flow velocity of the air. Hence, it is possible to efficiently cool the main power supply circuit board 80a with air, and even if the rotation speed of the exhaust fan 7 is reduced and the number of fans is reduced, it is possible to favorably cool the main power supply circuit board 80a. In addition, it is possible to reduce the noise of the apparatus.

Furthermore, in the present embodiment, as illustrated in FIG. 27, the sectional area G between the resin plate 170 that is the exit of the flow path that flows along the curved shape of the free mirror bracket 6 and the main power supply circuit board 80a is smaller than the sectional area of the first inlet port 10a that serves as the suction port of the first board cooling flow path R1. Thus, it is possible to increase the flow velocity of the board cooling air, when the board cooling air in the first board cooling flow path R1 passes through the gap between the resin plate 170 and the main power supply circuit board 80a. As a result, it is possible to increase the flow velocity of the board cooling air that flows along the main power supply circuit board 80a, and efficiently cool the main power supply circuit board 80a.

In addition, in the present embodiment, the sub-power supply circuit board is disposed in the second board cooling flow path R2 with a low flow rate. However, the operation board for operating the operation panel, the control board 200, or the connection circuit board for controlling the connection with an external device such as a personal computer may be disposed in the second board cooling flow path R2, instead of the sub-power supply circuit board. In addition, the positions of the main power supply circuit board 80a and the ballast board 12a may be changed. The ballast board 12a may also be divided into two, and a main ballast board including the electric element 112b cooled by the heat sink 112a may be disposed at the first board cooling flow path R1 side, and a sub-ballast board may be disposed at the second board cooling flow path R2 side.

In the present embodiment, the exhaust fan 7 is provided at the left side surface of the main body casing, and the exhaust direction of the exhaust fan 7 is in the direction substantially orthogonal to the projection direction (rear obliquely upward) of a projection image that is projected from the dustproof glass 51. As described above, because the air that has cooled the boards and the light source is discharged from the exhaust fan 7, the discharged air has higher temperature than the outside air. For example, when the exhaust fan 7 is mounted on the rear side sheet metal portion 14c of the main body casing, there is a possibility that the discharged air may rise and cross the light path of the projection image between the dustproof glass 51 and the projection surface S. The discharged air from the exhaust fan 7 has the higher temperature and the lower density than the surrounding air. Thus, the light that passes around the discharged air takes a path different from the usual path, and fluctuation such as a heat haze occurs in a projection image that is projected on the projection surface S. However, when the exhaust direction of the exhaust fan 7 is in the direction substantially orthogonal to the projection direction (rear obliquely upward) of the projection image that is projected from the dustproof glass 51, even if the discharged air may rise, the discharged air will not cross the light path of the projection image between the dustproof glass 51 and the projection surface S. As a result, it is possible to prevent fluctuation from occurring in the projection image that is projected on the projection surface S.

In the present embodiment, the exhaust fan 7 is mounted on the left side surface of the main body casing. However, the exhaust fan 7 may be mounted at a location as long as the discharged air of the exhaust fan does not cross the light path of the projection image between the dustproof glass 51 and the projection surface S. For example, the exhaust fan 7 may be mounted on the front side sheet metal portion 14b of the main body casing, so that the exhaust direction of the exhaust fan is in the front direction.

In the present embodiment, the inlet ports are provided on the right side sheet metal portion 14e that is at the side where the optical engine unit 100 is disposed, and the exhaust fan 7 is provided at the left side surface of the main body casing, that is opposite from the side where the optical engine unit 100 is disposed. In this manner, the outside air that is drawn in from each inlet port flows along the outer peripheral surface of the projection optical unit 2, thereby suppressing the temperature increase of the projection optical unit 2. As a result, it is possible to suppress the thermal expansion of the projection optical system such as the concave mirror and the projection lens unit, and maintain a good projection image.

In addition, in the present embodiment, the light source driving unit 12 is fixed to the front side sheet metal portion 14b, and a part of the heat of the ballast board 12a is conducted to the front side sheet metal portion 14b, thereby releasing the heat from the front side sheet metal portion. Consequently, it is possible to cool the ballast board 12a further effectively. Because the main power supply unit 8a is also fixed to the front side sheet metal portion, a part of the heat of the main power supply circuit board 80a is conducted to the front side sheet metal portion 14b, thereby releasing the heat from the front side sheet metal portion. Consequently, it is possible to cool the main power supply circuit board 80a further effectively. In addition, because the sub-power supply circuit board 80b is fixed to the rear side sheet metal portion 14c, a part of the heat of the sub-power supply circuit board 80b is conducted to the rear side sheet metal portion 14c, thereby releasing the heat from the rear side sheet metal portion. Consequently, it is possible to cool the sub-power supply circuit board 80b further effectively.

The above embodiment has been described by way of example only, and the present invention has specific advantageous effects for each of the following aspects.

### First Aspect

The image projection apparatus includes the exhaust fan 7 that discharges air in the apparatus to the outside of the apparatus; the light source 160 that includes the reflector 161, the light emitting tube 162 disposed inside the reflector 161, and the electrode portion 163 disposed outside the reflector 161 and electrically connected to the power supply, and that is disposed such that the reflector 161 is located further from the exhaust fan 7 than the electrode portion 163; and the plurality of ducts 82a to 82d that each has the air intake port such as the inlet port facing the light source, and that are arranged side by side in the rotation axis direction of the exhaust fan 7. A duct closer to the exhaust fan 7 in the rotation axis direction of the exhaust fan 7, has a larger flow path sectional area and has an outflow port from which the air flows out, placed close to the light source 160, in the direction perpendicular to the rotation axis of the exhaust fan 7.

In the image projection apparatus disclosed in Japanese Patent No. 5197117 described above, the reasons why large fluctuations in the temperature distribution of the exhaust air may occur are as follows. That is, an outflow port of a second duct closer to the exhaust fan in the rotation axis direction of the exhaust fan, among the second ducts, is placed closer to the lamp box than outflow ports of the other second ducts, in the direction perpendicular to the rotation axis direction of the exhaust fan. Thus, the second air that has flowed out from the second duct that is placed closer to the exhaust fan, is discharged from a location closer to the lamp box than the rotation axis of the exhaust fan, in the direction perpendicular to the rotation axis of the exhaust fan. At this time, most of the second air is discharged without being mixed with the mixed air of the first air and the third air that has flowed out from the first duct, the outflow port of which is placed furthest away from the lamp box, in the direction perpendicular to the rotation axis direction of the exhaust fan.

Meanwhile, most of the mixed air that has flowed out from the first duct is only mixed with the second air that has flowed out from the second duct that is adjacent to the first duct, among the second ducts. Thus, the mixed air is discharged from a location further away from the light source than the rotation axis of the exhaust fan, without the temperature being sufficiently reduced. In this manner, in the image projection apparatus disclosed in Japanese Patent No. 5197117, low-temperature air that is hardly mixed with the first air is discharged from the outlet port of the casing at a location closer to the light source, and relatively high-temperature air is discharged from the outlet port of the casing at a location further away from the light source, in the direction perpendicular to the rotation axis of the exhaust fan. Consequently, large fluctuations may occur in the temperature distribution of the exhaust air.

In the first aspect, the light source is disposed such that the reflector is placed further away from the exhaust fan than the electrode portion, in the rotation axis direction of the exhaust fan. Thus, the first air that has passed through the inside of the reflector flows at a location further away from the exhaust fan, in the rotation axis direction of the exhaust fan. Meanwhile, the second air that has passed the outside of the reflector flows at a location closer to the exhaust fan, in the rotation axis direction of the exhaust fan. As a result, the second air easily flows into the duct closer to the exhaust fan, in the rotation axis direction of the exhaust fan, and the first air easily flows into the duct further away from the exhaust fan.

The first air that easily flows into the duct further away from the exhaust fan is also made to flow into the duct closer to the exhaust fan. The air is made to easily flow into the duct closer to the exhaust fan, by making the duct closer to the exhaust fan in the rotation axis direction of the exhaust fan, have the larger flow path sectional area. Consequently, not only the second air but also a part of the first air is drawn into the duct that is placed closer to the exhaust fan. It is also possible to reduce the temperature, by mixing the high-temperature first air with the low-temperature second air in the duct.

Hardly any second air flows and almost only the first air flows into the duct that is placed further away from the exhaust fan, in the rotation axis direction of the exhaust fan. The suction force of the exhaust fan hardly affects the duct that is placed further away from the exhaust fan. Also, the flow path sectional area of the duct further away from the exhaust fan is narrow, thus making the air difficult to flow in. Consequently, the flow rate of the first air that flows into the duct further away from the exhaust fan, in the rotation axis direction of the exhaust fan, is small. Also, because the flow path sectional area of the duct further away from the exhaust fan is narrow, the flow path resistance is large. Furthermore, because the outflow port of the duct is placed further away from the light source, in the direction perpendicular to the rotation axis direction of the exhaust fan, the flow path length is longer. As a result, the flow velocity of the first air that has flowed out from the outflow port of the duct that is placed further away from the exhaust fan, is sufficiently reduced, and the first air does not flow powerfully toward the exhaust fan. Consequently, there will be no hot spots. The first air that has flowed out from the duct further away from the exhaust fan is slowed down, and the temperature of the first air is reduced before reaching the exhaust fan, while being mixed with the surrounding low-temperature air in a dispersed manner. In addition, because the flow rate of the air that flows into the duct further away from the exhaust fan is small, it is possible to sufficiently reduce the temperature of the air being dispersed as the above.

In this manner, because the temperature of the first air can be reduced sufficiently, it is possible to prevent large fluctuations in the temperature distribution of the exhaust air that is discharged from the outlet port of the casing.

### Second Aspect

According to the first aspect, the plurality of ducts 82a to 82d are arranged adjacent to the light source 160 in the direction perpendicular to the rotation axis direction of the exhaust fan 7. Also, the exhaust fan 7 is disposed such that the air that has flowed out from each of the ducts is directed toward the exhaust fan 7. The ducts make the air flow in the direction perpendicular to the rotation axis direction of the exhaust fan 7.

In such a case, by making the air flow in the direction perpendicular to the rotation axis direction of the exhaust fan 7, it is possible to make the flow path longer, as the duct is placed further away from the exhaust fan in the rotation axis direction of the exhaust fan, only by placing an outflow port of a duct from which the air flows out, closer to the light source, in the direction perpendicular to the rotation axis direction of the exhaust fan, as the duct is placed closer to the exhaust fan in the rotation axis direction of the exhaust fan.

Also, the ducts are arranged adjacent to the light source 160, in the direction perpendicular to the rotation axis direction of the exhaust fan 7, and the exhaust fan 7 is disposed so that the air that has flowed out from the ducts flows toward the exhaust fan 7. Thus, it is possible to make the length of the flow path of the air before reaching the exhaust fan, longer, as the air flows out from the duct that is placed further away from the exhaust fan, in the rotation axis direction of the exhaust fan.

Furthermore, the suction force of the exhaust fan is less affected, as the duct is further away from the exhaust fan, in the rotation axis direction of the exhaust fan. Thus, it is possible to make the air difficult to flow into the duct, as the duct is further away from the exhaust fan.

### Third Aspect

According to the first aspect or the second aspect, the image projection apparatus further includes the inflow portion 85 into which the first air that has passed inside the reflector 161 provided in the light source 160 and the second air that has passed outside the reflector 161 flow, and the air that has flowed into the inflow portion 85 flows into each of the ducts in a dispersed manner.

In such a case, the first air and the second air can be mixed in the inflow portion 85, by making the first air and the second air flow into the inflow portion 85. Also, it is possible to easily make the first air and the second air flow into the duct that is close to the exhaust fan.

### Fourth Aspect

According to the third aspect, the image projection apparatus further includes the light source housing unit such as the light source casing 151 that stores therein the light source 160. The light source housing unit includes the opening such as the light source outlet port 152 from which the first air and the second air are discharged.

In this case, while passing through the opening such as the light source outlet port 152, the first air and the second air collide with each other, and the first air and the second air are directed toward the ducts, while a part of the first air and a part of the second air are mixed with each other.

### Fifth Aspect

According to the fourth aspect, the opening such as the light source outlet port 152 of the light source housing unit such as the light source casing 151 is disposed closer to the exhaust fan than the outflow port 158b, through which the first air flows into the light source housing unit, in the rotation axis direction of the exhaust fan 7.

In such a case, as described with reference to FIG. 21, the flowing direction of the first air that has flowed into the light source housing unit such as the light source casing 151 from the outflow port 158b is suddenly changed toward the exhaust fan. Then, due to the suction force of the exhaust fan, the flowing direction of the first air is suddenly changed again from the upstream direction in the light emitting direction to the direction toward the opening such as the light source outlet port 152. In this manner, because the flowing direction changes suddenly, the flow resistance is increased, and slows down the flow velocity of the first air. Consequently, it is possible to reduce the flow velocity difference between the first air and the second air, thereby easily mixing the first air and the second air.

A part of the first air and the second air can be suitably mixed immediately before the light source outlet port 152, when the first air that flows toward the exhaust fan flows in from the direction perpendicular to the second air that is directed toward the opening such as the light source outlet port 152, in the rotation axis direction of the exhaust fan. Consequently, it is possible to reduce the temperature of the first air.

### Sixth Aspect

According to the fifth aspect, the end closer to the exhaust fan, of the opening such as the light source outlet port 152 of the light source housing unit such as the light source casing 151, is placed closer to the exhaust fan than the duct such as the first duct portion 82a being closest to the exhaust fan 7, in the rotation axis direction of the exhaust fan 7. Also, the end further away from the exhaust fan, of the opening of the light source housing unit, is placed closer to the exhaust fan than the duct such as the fourth duct portion 82d that is furthest away from the exhaust fan, in the rotation axis direction of the exhaust fan.

In such a case, as described with reference to FIG. 21, the portion between the outflow port 158b and the duct that is furthest away from the exhaust fan such as the fourth duct portion 82d, is separated by the light source housing unit such as the light source casing 151. As a result, the first air that has flowed into the light source housing unit from the outflow port 158b does not flow directly toward the duct that is furthest away from the exhaust fan. Instead, the first air makes a detour, passes through the opening such as the light source outlet port 152, and flows to a location closer to the exhaust fan than the duct that is furthest away from the exhaust fan 7 in the inflow portion 85. Thus, it is possible to easily make the first air flow into the duct that is placed closer to the exhaust fan.

### Seventh Aspect

According to any one of the third aspect to the sixth aspect, the image projection apparatus further includes the guide such as the wall 84 closer to the exhaust fan that is provided in the inflow portion 85 and that guides the second air to the duct that is close to the exhaust fan 7, in the rotation axis direction of the exhaust fan 7.

In such a case, as described in the embodiment, it is possible to make the second air flow into the duct closer to the exhaust fan, while preventing the flow velocity of the second air from reducing. Consequently, it is possible to reduce the flow velocity difference between the first air and the second air that flow into the second duct, and suitably mix the first air and the second air in the second duct.

### Eighth Aspect

According to any one of the first aspect to the seventh aspect, the air intake port such as the inlet port of the duct closer to the exhaust fan, in the rotation axis direction of the exhaust fan 7, has the larger opening area.

In such a case, as described in the embodiment, the duct closer to the exhaust fan can easily draw in air. Consequently, it is possible to make the first air suitably flow into the duct that is placed close to the exhaust fan.

### Ninth Aspect

According to any one of the first aspect to the eighth aspect, the outflow port of the duct such as the fourth duct portion 82d that is furthest away from the exhaust fan, in the rotation axis direction of the exhaust fan 7, is placed closer to the light source than the rotation axis 7a of the exhaust fan, in the direction perpendicular to the rotation axis direction of the exhaust fan.

In such a case, it is possible to suitably disperse the rest of the first air that has flowed out from the duct further away from the exhaust fan, while the rest of the first air is directed toward the exhaust fan. Thus, it is possible to discharge the rest of the first air through a wide area. Consequently, it is possible to reduce the heat value of the rest of the first air to be discharged from the exhaust fan per unit area, and prevent the high-temperature air from being discharged.

The above-described embodiments are illustrative and do not limit the present invention. Thus, numerous additional modifications and variations are possible in light of the above teachings. For example, at least one element of different illustrative and exemplary embodiments herein may be combined with each other or substituted for each other within the scope of this disclosure and appended claims. Further, features of components of the embodiments, such as the number, the position, and the shape are not limited the embodiments and thus may be preferably set. It is therefore to be understood that within the scope of the appended claims, the disclosure of the present invention may be practiced otherwise than as specifically described herein.

## Claims

1. An image projection apparatus comprising:
an exhaust fan (7) configured to discharge air in the apparatus to outside of the apparatus;
a light source (160); and
a plurality of ducts (82a, 82b, 82c, 82d) each having an air intake port facing the light source (160), and arranged side by side in a rotation axis direction of the exhaust fan, **characterised in that**:
each duct has an outflow port from which air flows out in a direction perpendicular to the rotation axis direction of the exhaust fan,
a duct closer to the exhaust fan, in a rotation axis direction of the exhaust fan, has a larger flow path sectional area (D₁, D₂, D₃, D₄) than a duct placed further away from the exhaust fan, and
a duct closer to the exhaust fan, in a rotation axis direction of the exhaust fan, has an outflow port that is closer to the light source than is the outflow port of a duct further away from the exhaust fan.

2. The image projection apparatus according to claim 1, wherein
the plurality of ducts (82a, 82b, 82c, 82d) are arranged adjacent to the light source in the direction perpendicular to the rotation axis direction of the exhaust fan,
the exhaust fan (7) is disposed such that the air that has flowed out from each of the ducts is directed toward the exhaust fan; and
the ducts are configured to make the air flow in the direction perpendicular to the rotation axis direction of the exhaust fan.

3. The image projection apparatus according to claim 1 or 2, further comprising:
an inflow portion (85) into which first air that has passed inside a reflector (161) provided in the light source (160) and second air that has passed outside the reflector (163) flow, wherein
air that has flowed into the inflow portion flows into each of the ducts in a dispersed manner.

4. The image projection apparatus according to claim 3, further comprising;
a light source housing unit (151) housing the light source (160), wherein
the light source housing unit includes an opening (152) from which the first air and the second air are discharged.

5. The image projection apparatus according to claim 4, wherein the opening (152) of the light source housing unit (151) is disposed closer to the exhaust fan (7) than an outflow port (158b) through which the first air flows into the light source housing unit (151), in the rotation axis direction of the exhaust fan.

6. The image projection apparatus according to claim 4 or 5, wherein
an end closer to the exhaust fan (7), of the opening (152) of the light source housing unit (151) is placed closer to the exhaust fan (82a) than a duct that is closest to the exhaust fan, in the rotation axis direction of the exhaust fan, and
an end further away from the exhaust fan, of the opening (152) of the light source housing unit is placed closer to the exhaust fan than a duct that is furthest away from the exhaust fan (82d), in the rotation axis direction of the exhaust fan.

7. The image projection apparatus according to any one of claims 3 to 6, further comprising a guide (84) disposed in the inflow portion (85) and configured to guide the second air to a duct close to the exhaust fan (82a), in the rotation axis direction of the exhaust fan.

8. The image projection apparatus according to any one of claims 1 to 7, wherein an air intake port (d₁, d₂, d₃, d₄) of a duct closer to the exhaust fan, in the rotation axis direction of the exhaust fan, has a larger opening area.

9. The image projection apparatus according to any one of claims 1 to 8, wherein an outflow port of a duct (82d) that is furthest away from the exhaust fan in the rotation axis direction of the exhaust fan, is placed closer to the light source (160) than a rotation axis (7a) of the exhaust fan, in the direction perpendicular to the rotation axis direction of the exhaust fan.

## Patentansprüche

1. Bildprojektionsvorrichtung, umfassend:
einen Abluftventilator (7), der konfiguriert ist, um Luft in der Vorrichtung nach außerhalb der Vorrichtung abzuführen;
eine Lichtquelle (160); und
eine Vielzahl von Kanälen (82a, 82b, 82c, 82d), die jeweils eine Lufteinlassöffnung aufweisen, die der Lichtquelle (160) zugewandt ist, und die Seite an Seite in einer Drehachsenrichtung des Abluftventilators angeordnet sind, **dadurch gekennzeichnet, dass**:
jeder Kanal eine Ausströmöffnung aufweist, aus der die Luft in einer Richtung senkrecht zur Drehachsenrichtung des Abluftventilators ausströmt,
ein Kanal, der in einer Drehachsenrichtung des Abluftventilators näher an dem Abluftventilator liegt, eine größere Strömungspfad-Querschnittsfläche (D₁, D₂, D₃, D₄) aufweist als ein Kanal, der weiter von dem Abluftventilator entfernt angeordnet ist, und
ein Kanal, der in einer Drehachsenrichtung des Abluftventilators näher an dem Abluftventilator liegt, eine Ausströmöffnung aufweist, die näher an der Lichtquelle liegt als die Ausströmöffnung eines Kanals, der weiter von dem Abluftventilator entfernt ist.

2. Bildprojektionsvorrichtung nach Anspruch 1, wobei
die Vielzahl von Kanälen (82a, 82b, 82c, 82d) in der Richtung senkrecht zur Drehachsenrichtung des Abgasventilators angrenzend an die Lichtquelle angeordnet sind,
der Abluftventilator (7) so angeordnet ist, dass die Luft, die aus jedem der Kanäle ausgeströmt ist, auf den Abluftventilator gerichtet ist; und
die Kanäle konfiguriert sind, um den Luftstrom in der Richtung senkrecht zur
Drehachsenrichtung des Abluftventilators zu erzeugen.

3. Bildprojektionsvorrichtung nach Anspruch 1 oder 2, ferner umfassend:
einen Einströmabschnitt (85), in den eine erste Luft, die in einen in der Lichtquelle (160) vorgesehenen Reflektor (161) verlaufen ist, und eine zweite Luft, die außerhalb des Reflektors (163) verlaufen ist, strömt, wobei
Luft, die in den Einströmabschnitt geströmt ist, auf gestreute Weise in jeden der Kanäle strömt.

4. Bildprojektionsvorrichtung nach Anspruch 3, ferner umfassend;
eine Lichtquellengehäuseeinheit (151), die die Lichtquelle (160) aufnimmt,
wobei
die Lichtquellengehäuseeinheit eine Öffnung (152) aufweist, aus der die erste Luft und die zweite Luft ausgelassen werden.

5. Bildprojektionsvorrichtung nach Anspruch 4, wobei die Öffnung (152) der Lichtquellengehäuseeinheit (151) näher an dem Abluftventilator (7) angeordnet ist als eine Ausströmöffnung (158b), durch die die erste Luft in der Drehachsenrichtung des Abluftventilators in die Lichtquellengehäuseeinheit (151) strömt.

6. Bildprojektionsvorrichtung nach Anspruch 4 oder 5, wobei
ein Ende der Öffnung (152) der Lichtquellengehäuseeinheit (151), das näher an dem Abluftventilator (7) ist, näher an dem Abluftventilator (82a) platziert ist als ein Kanal, der dem Abluftventilator in der Drehachsenrichtung des Abluftventilators am nächsten liegt, und
ein Ende der Öffnung (152) der Lichtquellengehäuseeinheit, das weiter von dem Abluftventilator entfernt ist, näher an dem Abluftventilator platziert ist als ein Kanal, der in der Drehachsenrichtung des Abluftventilators am weitesten von dem Abluftventilator (82d) entfernt ist.

7. Bildprojektionsvorrichtung nach einem der Ansprüche 3 bis 6, ferner umfassend eine Führung (84), die im Einströmabschnitt (85) angeordnet und konfiguriert ist, um die zweite Luft zu einem Kanal nahe dem Abluftventilator (82a) in der Drehachsenrichtung des Abluftventilators zu führen.

8. Bildprojektionsvorrichtung nach einem der Ansprüche 1 bis 7, wobei eine Lufteinlassöffnung (d₁, d₂, d3, d₄) eines Kanals, der näher an dem Abluftventilator liegt, in der Drehachsenrichtung des Abluftventilators einen größeren Öffnungsbereich aufweist.

9. Bildprojektionsvorrichtung nach einem der Ansprüche 1 bis 8, wobei eine Ausströmöffnung eines Kanals (82d), die in Drehachsenrichtung des Abluftventilators am weitesten von dem Abluftventilator entfernt ist, näher an der Lichtquelle (160) angeordnet ist als eine Drehachse (7a) des Abluftventilators, in der Richtung senkrecht zur Drehachsenrichtung des Abluftventilators.

## Revendications

1. Appareil de projection d'image comprenant :
un ventilateur d'extraction (7) conçu pour évacuer l'air dans l'appareil vers l'extérieur de l'appareil ;
une source de lumière (160) ; et
une pluralité de conduits (82a, 82b, 82c, 82d), chacun présentant un orifice d'admission d'air faisant face à la source de lumière (160), et agencés côte à côte dans une direction d'axe de rotation du ventilateur d'extraction, **caractérisé en ce que** :
chaque conduit présente un orifice d'évacuation d'où l'air est évacué dans une direction perpendiculaire à la direction d'axe de rotation du ventilateur d'extraction,
un conduit plus proche du ventilateur d'extraction, dans une direction d'axe de rotation du ventilateur d'extraction, présente une zone transversale de trajet d'écoulement (D₁, D₂, D₃, D₄) plus grande qu'un conduit placé plus loin du ventilateur d'extraction, et
un conduit plus proche du ventilateur d'extraction, dans une direction d'axe de rotation du ventilateur d'extraction, présente un orifice d'évacuation qui est plus proche de la source de lumière que ne l'est l'orifice d'évacuation d'un conduit plus loin du ventilateur d'extraction.

2. Appareil de projection d'image selon la revendication 1, dans lequel
la pluralité de conduits (82a, 82b, 82c, 82d) sont agencés de manière adjacente à la source de lumière dans la direction perpendiculaire à la direction d'axe de rotation du ventilateur d'extraction,
le ventilateur d'extraction (7) est disposé de manière que l'air qui s'est écoulé hors de chacun des conduits est dirigé vers le ventilateur d'extraction ; et
les conduits sont conçus pour faire écouler l'air dans la direction
perpendiculaire à la direction d'axe de rotation du ventilateur d'extraction.

3. Appareil de projection d'image selon la revendication 1 ou 2, comprenant en outre :
une partie de flux entrant (85) dans laquelle un premier air qui est passé à l'intérieur d'un réflecteur (161) disposé dans la source de lumière (160) et un deuxième air qui est passé à l'extérieur du réflecteur (163) s'écoulent,
l'air qui s'est écoulé dans la partie de flux entrant s'écoulant dans chacun des conduits de manière dispersée.

4. Appareil de projection d'image selon la revendication 3, comprenant en outre :
une unité de logement de source de lumière (151) logeant la source de lumière
(160),
l'unité de logement de source de lumière comprenant une ouverture (152) d'où le premier air et le deuxième air sont évacués.

5. Appareil de projection d'image selon la revendication 4, dans lequel l'ouverture (152) de l'unité de logement de source de lumière (151) est disposée plus près du ventilateur d'extraction (7) qu'un orifice de sortie (158b) à travers lequel le premier air s'écoule dans l'unité de logement de source de lumière (151), dans la direction d'axe de rotation du ventilateur d'extraction.

6. Appareil de projection d'image selon la revendication 4 ou 5, dans lequel
une extrémité plus proche du ventilateur d'extraction (7), de l'ouverture (152) de l'unité de logement de source de lumière (151) est placée plus près du ventilateur d'extraction (82a) qu'un conduit qui est plus proche du ventilateur d'extraction, dans la direction d'axe de rotation du ventilateur d'extraction, et
une extrémité plus éloignée du ventilateur d'extraction, de l'ouverture (152) de l'unité de logement de source de lumière est placée plus près du ventilateur d'extraction qu'un conduit qui est plus loin du ventilateur d'extraction (82d), dans la direction d'axe de rotation du ventilateur d'extraction.

7. Appareil de projection d'image selon l'une quelconque des revendications 3 à 6, comprenant en outre un guide (84) disposé dans la partie d'entrée (85) et conçu pour guider le deuxième air vers un conduit proche du ventilateur d'extraction (82a), dans la direction d'axe de rotation du ventilateur d'extraction.

8. Appareil de projection d'image selon l'une quelconque des revendications 1 à 7, dans lequel l'orifice d'admission d'air (d₁, d₂, d₃, d₄) d'un conduit plus proche du ventilateur d'extraction, dans la direction d'axe de rotation du ventilateur d'extraction, comporte une zone d'ouverture plus grande.

9. Appareil de projection d'image selon l'une quelconque des revendications 1 à 8, dans lequel un orifice de sortie d'un conduit (82d) qui est plus loin du ventilateur d'extraction dans la direction d'axe de rotation du ventilateur d'extraction, est placé plus près de la source de lumière (160) qu'un axe de rotation (7a) du ventilateur d'extraction, dans la direction perpendiculaire à la direction d'axe de rotation du ventilateur d'extraction.
